**Europäisches Patentamt**

**European Patent Office**

**Office européen des brevets**

(11) Veröffentlichungsnummer: **0 227 924**
**A2**

(12) **EUROPÄISCHE PATENTANMELDUNG**

(21) Anmeldenummer: **86115568.7**

(22) Anmeldetag: **10.11.86**

(51) Int. Cl.⁴: **G 05 F 1/70, H 02 J 3/18**

(30) Priorität: **18.11.85 US 799162**

(43) Veröffentlichungstag der Anmeldung: **08.07.87**
**Patentblatt 87/28**

(84) Benannte Vertragsstaaten: **AT BE CH DE ES FR GB GR IT LI LU NL SE**

(71) Anmelder: **Ruhstrat GmbH, Heinestr. 12-22, D-3400 Göttingen (DE)**

(72) Erfinder: **Rohatyn, Frederick, 166-10 15th Drive Beechhurst, 11357 N.Y. (US)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

(54) **Blindleistungsregeleinrichtung zur Blindleistungskontrolle und Leistungsfaktorkorrektur.**

㊅ Blindleistungsregeleinrichtung zur Blindleistungskontrolle und Leistungsfaktorkorrektur, bestehend aus einer Blindleistungsausgleichsvorrichtung, die in Abhängigkeit einer induktiven oder kapazitiven Last im Netz mit vorgegebener Netzspannung über sich ändernden kapazitiven oder induktiven Einrichtungen eine kompensierende Blindleistung erzeugt, wobei die Blindleistungsausgleichsvorrichtung im Nebenschluß zum Netz geschaltet ist, mindestens eine feste kapazitive oder induktive Einrichtung und ein separates Versorgungsnetz beinhaltet, welches die Spannung für die kapazitive oder induktive Einrichtung liefert, wobei das separate Versorgungsnetz, in Abhängigkeit der im Netz vorhandenen Last, die an der kapazitiven oder induktiven Einrichtung angelegte Spannung automatisch fortlaufend stufenlos derart regelt, daß eine kompensierende Blindleistung erzeugt wird, die sich quadratisch mit der momentan angelegten Spannung ändert. Das separate Versorgungsnetz besteht aus einem Serientransformator (3) mit isolierter Primär- (4) und Sekundärentwicklung (5) und einem Stelltransformator (6), wobei die Sekundärentwicklung (5) des Serientransformators (3) in Reihe mit der kapazitiven oder induktiven Einrichtung geschaltet und der Stelltransformator (6) an das Netz angeschlossen ist. Die stufenlose Regelung der dem Kondensator (10) zugeführten Spannung erfolgt über ein Verschieben der Stromabnehmer (7) und (8) des Stelltransformators (6). Die Stromabnehmer (7)

und (8) werden von einem DC-Motor (11) positioniert, wobei der DC-Motor (11) von Regelschleifen (12), die die Größe der durch die Last (1) hervorgerufenen Blindleistung und der kompensierenden Blindleistung ermitteln, gesteuert wird. Weiterhin sind Kontrolleinrichtungen vorgesehen, die eine eventuell auftretende Anfangsresonanz ermitteln und unterdrücken.

Blindleistungsregeleinrichtung zur Blindleistungskontrolle und Leistungsfaktorkorrektur

Die Erfindung bezieht sich auf eine Blindleistungsregeleinrichtung zur Blindleistungskontrolle und Leistungsfaktorkorrektur, bestehend aus einer Blindleistungsausgleichsvorrichtung, die in Abhängigkeit einer induktiven oder kapazitiven Last im Netz mit vorgegebener
Netzspannung über sich ändernden kapazitiven oder induktiven Einrichtungen eine kompensierende Blindleistung
erzeugt.

Eine Blindleistungsregeleinrichtung mit den im Oberbegriff des Hauptanspruchs angegebenen Merkmalen ist
bekannt. Blindleistungen entstehen durch einer an das
Netz angeschlossenen induktiven oder kapazitiven Last.
Bei einer induktiven Last, zum Beispiel einem Elektromotor, erhält man eine nacheilende Blindleistung.
Diese nacheilende Blindleistung wird durch Kondensatoren
kompensiert, die eine vorauseilende Blindleistung liefern.

Um eine ideale Kompensation zu erreichen, sollte die
Größe der kompensierenden vorauseilenden Blindleistung
der Größe der bestehenden nacheilenden Blindleistung
gleichgesetzt werden, da das System sonst unter- oder
überkompensiert wird. Um einer optimalen Kompensation
so nahe wie möglich zu kommen, ist es bekannt, die
erforderlichen, parallel zu schaltenden Kapazitäten
aufzuteilen in eine Vielzahl von Kondensatoren, die
durch Zu- und Abschaltung in dem Kreis parallel geschaltet sind. Diese Kondensatorschalttechnik stammt
aus der Zeit vor 1918; hierbei wurden überwiegend 6
bis 9 parallel geschaltete Kondensatoren verwendet,
welche durch Schütze geschaltet wurden, deren Spulen
durch automatische Kontrolleinrichtungen gesteuert
wurden, die wiederum durch Erfassen entweder des
Leistungsfaktors oder des Verhältnisses von voraus-

0227924

eilendem zu nacheilendem Blindstrom oder vorauseilender zu nacheilender Blindleistung aktiviert
wurden.

Ein großer Nachteil dieser Kondensatorschalttechnik ist der, daß man zum Kompromiß gezwungen
ist und einen Kompensationsgrad erreicht, der vom
idealen Wert oder sogar von einem akzeptablen Wert
abweicht. Bei Verwendung von 6 Kondensatoren zum
Beispiel würde die Abweichung 1/12 des kompensierbaren Wertes betragen.

Weiterhin nachteilig ist, daß eine Überkompensation,
also eine Leistungsfaktorkorrektur größer als 1,0,
auftreten kann. Mit der Kombination von stufenweiser
Zunahme der Kapazität und abrupter maximaler Stromschaltung könnte eine Überkompensation Überspannungen
von 40% im Netz und nachfolgende Schäden an der
Last, zum Beispiel an den Motorantriebseinrichtungen,
unter bestimmten Betriebsbedingungen zur Folge haben.

Ein weiterer Nachteil liegt in der Kondensatorschaltung
selbst. Bei Schaltung eines jeden Kondensators ergibt
sich ein Stromstoß, eine Spitze oder ähnliches, welches
extrem schädlich ist für empfindliche kritische elektronische Geräte, die an das Netz angeschlossen sind.
Solche stromempfindlichen Geräte sind zum Beispiel
Computer, bei denen sich als Hauptursache für Störungen die Kondensatorschaltung herausgestellt hat.
Bei den heutigen Kondensatorschaltsystemen wird zwar die
Zu- und Abschaltung der Kondensatoren im Spannungsnulldurchgang durchgeführt, aber hierdurch wird wenig erreicht,
weil sich bei Kapazitäten die Stromamplitude im Maximum
befindet, wenn die Spannungskurve durch Null geht und
umgekehrt.

Selbst bei Nichtvorhandensein von empfindlichen elektronischen Geräten verursacht die bisherige Methode
der Kondensatorschaltung, die physikalisch gesehen rauh und heftig reagiert, häufiges Auslösen der
Kondensatorsicherungen. Dieses verursacht Leistungsverluste und erfordert dadurch eine Verbraucherleistungszunahme sowie Betriebskosten während der Übergangsphase,
bis die Sicherungen ersetzt sind.

Weitere Störungen treten bei dem bisherigen Stand der
Technik auf, wenn der Verbraucher am Versorgungsnetz
aus Gleichrichtern besteht, und zwar aus netzgeführten
Stromrichtern, die bekannterweise eine sehr wesentliche
Blindleistungskomponente und auch sehr wesentliche 5.,
7. und 11. Oberwellen erzeugen. Es besteht die Gefahr,
daß bei der Gleichrichter- Transformator- Wicklung bei
einer bestimmten Schaltphase ein Resonanzkreis entsteht,
dessen Frequenz dicht mit der Frequenz der 5. oder
anderen ungeraden Oberwellen zusammentrifft und so die
Stromzunahme in gefährlichem Maße unkontrollierbar wird.

Weiterhin nachteilig ist, daß die Kondensatoren mit
Entladungswiderständen bestückt werden müssen. Bei
Netzausfall oder einer Leistungsabschaltung oder
Sicherungsauslösung, die häufig auftritt, bestand
der Kreis ohne jegliche Entladung, und ohne die Entladungswiderstände würden die Kondensatoren bei der
nächsten Belastung explodieren, wenn zur bestehenden
Ladung eine weitere hinzugefügt wird. Die Entladungswiderstände haben neben den Beschaffungskosten den
noch wesentlicheren Nachteil des ständigen Energieverbrauchs.

Ein weiterer Nachteil besteht in dem Unvermögen der
Zurücksetzung des Grundanteils des Blindleistungskorrekturbereiches. Wenn man die Größe der zu
korrigierenden Blindleistung untersucht, so ist die
obere Grenze, nämlich die höchste vorauseilende Blindleistung, genau bestimmt. Bei der niedrigsten je benötigten Blindleistung sind selten Werte niedriger
als 40% der höchsten Blindleistung erforderlich. Bei
dem bisherigen Stand der Technik ist der Grundanteil jeglichen zu korrigierenden Blindleistungsbereiches
immer Null, was unnötig und außerdem unangebracht
ist.

Weiterhin nachteilig ist die Tatsache, daß die
Kondensatoren zu jeder Zeit bei voller Nennspannung
arbeiten, und bei bestimmten Schaltstufen erhöht
sich die Spitzenspannung über den Wert der Nennspitzenspannung der Kondensatoren, was diese
Kondensatoren zerstören oder ihre Lebensdauer
reduzieren kann.

Der Erfindung liegt die Aufgabe zugrunde, eine
Blindleistungsregeleinrichtung der eingangs beschriebenen Art so weiter zubilden, daß bei geringem
baulichen Aufwand die kompensierende Blindleistung
kontinuierlich geregelt werden kann und ein Leistungsfaktor von eins erreicht wird.

Erfindungsgemäß wird dies dadurch erreicht, daß
die Blindleistungsausgleichsvorrichtung im Nebenschluß zum Netz geschaltet ist, mindestens eine
feste kapazitive oder induktive Einrichtung und ein
separates Versorgungsnetz beinhaltet, welches die
Spannung für die kapazitive oder induktive Einrichtung
liefert, wobei das separate Versorgungsnetz, in Abhängigkeit der im Netz vorhandenen Last, die an der
kapazitiven oder induktiven Einrichtung angelegte
Spannung automatisch fortlaufend stufenlos derart
regelt, daß eine kompensierende Blindleistung erzeugt wird, die sich quadratisch mit der momentan angelegten Spannung ändert. Die kompensatorische Blindleistung des elektrischen Systems wird also durch Erhöhen oder Erniedrigen der den kapazitiven oder induktiven Einrichtungen zugeführten Spannung geregelt. Die
Regelung der Spannung, und damit der kompensierenden
Blindleistung, erfolgt stufenlos, wodurch Stromstöße
Stromspitzen oder ähnliches im Netz vermieden werden.

Weiterhin kann durch die kontinuierliche Regelung
ein Leistungsfaktor von eins erreicht werden, ohne
Überspannungen im Netz, hervorgerufen durch die
stufenweise Zuschaltung der induktiven oder kapazitiven
Einrichtungen, zu erhalten.

Bei erfindungsgemäßer Ausführung der Blindleistungregeleinrichtung kann die kompensierende Blindleistung
in einem Bereicht variiert werden, der von Maximum
bis herunter zu Null reicht. Es besteht weiterhin die
Möglichkeit, die untere Grenze des Bereichs größer
als Null zu wählen, wodurch die Größe der induktiven
oder kapazitiven Einrichtung für die kompensierende
Blindleistung reduziert werden kann und folglich die
Kosten der Blindleistungsregeleinrichtung reduziert
wird. Die untere Grenze des Bereichs liegt etwa bei
40% der maximal benötigten, kompensierenden Blindleistung. Eine den induktiven oder kapazitiven Einrichtungen zugeführte Spannung mit dem Wert Null,
was gleichzusetzen ist mit dem Nichtvorhandensein
einer eine Blindleistung hervorrufenden Last im Netz,
ist niemals erforderlich. Das nachfolgende Beispiel
veranschaulicht, in welchem Maße eine Größenreduzierung der Blindleistungsregeleinrichtung möglich ist:

Es wird eine Last im Netz angenommen, die eine nacheilende Blindleistung erzeugt, also zum Beispiel ein
Elektromotor. Das Netz ist einphasig und hat eine
Leistung von 200 kVA, 60 Hz, 240 V, und benötigt eine
maximale kompensierende Blindleistung von 100 kVAR. Bei
Anwendung der in dem Stand der Technik bekannten Methode
zur Blindleistungkompensation werden 9 Kondensatoren
vorgesehen, wobei jeder eine Blindleistung von 11,1 kVAR
bei 240 V besitzt. Die stufenweise Parallelschaltung
der Kondensatoren bewirkt die folgenden Blindleistungen:

0,0/11,1/22,2/33,3/44,4/55,5/66,6/77,7/88,8/99,9 kVAR,
wobei die ersten 3 bis 4 Stufen nicht erforderlich
sind. Nimmt man die jedoch weg, wird die Vorrichtung
teurer, weil ein höherer Nennstrom geschaltet werden
muß. Es ist weniger praktikabel, weil die Elemente
nicht mehr austauschbar wären.

Als 2. Beispiel wird die hier vorgeschlagene Blindleistungsregeleinrichtung benutzt. Es wird eine einzelne kapazitive Vorrichtung, also ein einzelner
Kondensator, mit einer Blindleistung von 100 kVAR bei
480 V verwendet. Solch ein Kondensator kostet ungefähr
nur 1/4 eines einzelnen Kondensators mit einer Blindleistung von 100 kVAR bei 240 V oder sogar weniger im
Vergleich zu 9 unterteilten Kondensatoren. Der Spannungsbereich des verwendeten Kondensators beträgt 480 V zu
Null. Eine Hälfte dieser Blindleistung kommt direkt
vom Netz, die andere Hälfte, d. h. 50 kVA, wird von
dem separaten Versorgungsnetz geliefert.

In dem folgenden Beispiel soll der Grundbereich der kompensierenden Blindleistung entfallen. Es wird ein Kondensator für 100 kVAR und 360 V verwendet. Die niedrigste
dem Kondensator zugeführte Spannung sei 120 V, die
höchste 360 V. Die Leistung des separaten Versorgungsnetzes beträgt dann 33,3 kVA. Dies ist eine Einsparung
von 1/3 der Leistung. Jedoch ist der hier verwendete
360 V Kondensator treurer als der 480 V Kondensator
bei gleicher Größe der Blindleistung von 100 kVAR.

Es können also Kondensatoren für höhere Nennspannungen
verwendet werden. Es ist bekannt, je höher die Nennspannung des Kondensators ist, desto niedriger ist seine
Kapazität in Mikrofarat für ein gegebenen kVA-Wert und
folglich desto niedriger sein Preis.

Es kann ein einzelner Kondensator, im Gegensatz zu
mehreren Kondensatoren mit kleineren Werten, verwendet
werden. Ein einzelner größerer Kondensator ist wirtschaftlicher hinsichtlich Kosten und Größe sowie
Aufwand für Montage und Verdrahtung.

Vorteilhaft braucht bei einer an die kapazitive Einrichtung angelegten kontinuierlich regelbaren Spannung
keine Sicherung vorgesehen zu werden, da durch das Nichtvorhandensein von abruptem vorauseilendem Blindstromwechsel die Chance, daß solch eine Sicherung auslöst,
gleich Null ist.

Das separate Versorgungsnetz besteht vorteilhaft aus
einem Serientransformator mit isolierter Primär- und
Sekundärwicklung und einem Stelltransformator, wobei
die Sekundärwicklung des Serientransformators in Reihe
mit der kapazitiven oder induktiven Einrichtung geschaltet und der Stelltransformator an das Netz angeschlossen ist. Mit einem Stelltransformator kann in einfacher Weise eine variable Spannung erzeugt werden. Die
variable Spannung des Stelltransformators speist die
Primärwicklung des Serientransformators. Die Primärwicklung des Serientransformators induziert eine
zweite variable Spannung in die Sekundärwicklung des
Serientransformators. Die Spannung der Sekundärwicklung
ist in Phase mit der Spannung des Netzes. Die Größe
der induzierten Spannung ist abhängig von der Stellung
des Stelltransformators und dem Übersetzungsverhältnis
der Primär- zur Sekundärwicklung des Serientransformators.
Die der induktiven oder kapazitiven Einrichtung für die
kompensierende Blindleistung zugeführte Spannung variiert
zwischen der Größe der Netzspannung und der höchsten
verfügbaren Spannung der Sekundärwicklung des Serientransformators. Die Spannung kann nach Belieben in
unendlich kleinen Schritten verändert werden und erzeugt
dadurch extrem genaue Werte.

Weiterhin ist die variable Spannung bei Verwendung eines
Stelltransformators und eine Serientransformators frei
von jeglichen Störungen.

Vorteilhaft kann die Rückführsignalsteuerung auch
aus einem Blindleistungssensor bestehen, der im
separaten Versorgungsnetz eingefügt ist und die
kompensierende Blindleistung anzeigt. Damit wird
dann die kompensierende Blindleistung direkt mit
der durch die Last hervorgerufenen Blindleistung
verglichen. Durch die Verwendung eines Blindleistungssensors anstelle eines z-Dioden- Reglers wird
eine verbesserte Genauigkeit der Blindleistungskompensation erreicht, da ein z-Dioden- Regler,
auch wenn er einwandfrei arbeitet, mit größeren
Fehlern behaftet ist.

Vorteilhaft hängt die Genauigkeit des Systems nicht
von der Sinusform oder der Frequenz der Netzspannung
ab, im Gegensatz zu einem Regelsystem mit Leistungsfaktormeßeinrichtungen, welches frequenzempfindlich
ist.

Vorteilhaft weist der Stelltransformator für jede
Phase des Netzes eine Wicklungssäule auf, wobei
jede Wicklungssäule eine gleiche Anzahl von Stromabnehmern hat, die um 180° versetzt auf dem Umfang
der Wicklungsoberfläche angeordnet sind und von
denen jeweils die Hälfte in entgegengesetzter Richtung
läuft und für jede Phase des Netzes eine kapazitive
oder induktive Einrichtung vorgesehen ist. Die Richtungen,
in denen die Stromabnehmer auf dem Stelltransformator
geführt werden, sind umkehrbar. Somit ist eine unendliche Variation der Größe und eine Polaritätsumkehr
der variablen Spannung im separaten Versorgungsnetz
möglich.

Vorteilhaft weist das separate Versorgungsnetz Regelschleifen auf, die einen Blindleistungssensor und einen
Blindleistungsregler beinhalten, wobei der Blindleistungssensor ein Rückführsignal erzeugt, welches proportional
der durch die Last im Netz hervorgerufenen Blindleistung
ist und der Blindleistungsregler aus einer Rückführsignalsteuerung, die ein der kompensierenden Blindleistung proportionales Referenzsignal erzeugt, einer
Komparatoreinrichtung, die das Rückführ- und Referenzsignal vergleicht und in Abhängigkeit davon ein Fehlererkennungssignal bildet und einem  Servoverstärker, der in
Abhängigkeit vom Fehlererkennungssignal den Stelltransformator regelt, besteht.

Diese Regelschleifen bieten vorteilhaft die Möglichkeit, daß die Blindleistungsregeleinrichtung voll
automatisch betrieben werden kann. Natürlich ist auch
die Möglichkeit vorgesehen, manuel in die Regeleinrichtung einzugreifen. Bei voll automatischem Betrieb
wird die kompensatorische Blindleistung fortlaufend
stufenlos derart geregelt, daß sie die im Netz vorhandene, durch die Last hervorgerufene, Blindleistung
praktisch vollständig kompensiert. Die Genauigkeit der
Kompensation ist dabei abhängig von der Nenngenauigkeit
des Blindleistungsreglers.

Die Rückführsignalsteuerung, die ein der kompensierenden
Blindleistung proportionales Referenzsignal erzeugt,
kann aus einem      Z-Dioden- Regler bestehen. Der
       Z-Dioden- Regler wird von der Regelspannung gespeist und weist      Z-Dioden und am Ausgang eine
Potentiometereinstellung auf.

Vorteilhaft ist die feste kapazitive Einrichtung ein einzeler Kondensator, der eine höhere Nennspannung als das Netzes haben kann. Dadurch werden die Kosten der Blindleistungsregeleinrichtung reduziert, da der Preis für einen Kondensator pro kVA sehr viel niedriger ist, wenn die Nennspannung erhöht wird. Dies ist insbesondere dann wirtschaftlich, wenn eine hohe kompensierende Blindleistung erforderlich ist.

Vorteilhaft ist dem Servoverstärker ein DC-Motor nachgeschaltet. Der Elektromotor wird vom Servoverstärker gesteuert und verschiebt seinerseits die Stromabnehmer des Stelltransformators. Durch die Verwendung eines umkehrbaren DC-Motors können die Stromabnehmer mit variabler Geschwindigkeit verfahren und dynamisch gebremst werden. Dies gewährleistet die schnelle Reaktion der Blindleistungsregeleinrichtung auf Änderungen der im Netz vorhandenen, durch eine Last hervorgerufenen, Blindleistung.

Vorteilhaft weist das separate Versorgungsnetz weiterhin einen Spartransformator in Zu- und Gegenschaltung auf, der vom Netz gespeist wird und dessen Ausgang vor die Sekundärwicklung des Serientransformators geschaltet ist. Die an dem Kondensator angelegte Spannung kann mit Hilfe des Spartransformators, entsprechend den vorliegenden Gegebenheiten, verschoben werden. Die Kondensatorspannung kann wesentlich höher als die verfügbare Netzspannung gewählt werden. Dies ist insoweit wichtig, da aus Kostengründen ein Kondensator mit höherer Nennspannung als die verfügbare Netzspannung bevorzugt wird. Der Spartransformator beinhaltet eine Grundwicklung und eine Zusatzwicklung. Die höchste Spannung, die mit der Kondensatornennspannung gleichgesetzt werden muß und die die höchste vorauseilende Blindleistung ergibt, ist
gleich der Spannung: Spannung der Zusatzwicklung
zu neutral plus Spannung der Zusatzwicklung zu
neutral dividiert durch das Verhältnis der Windungen der Primärwicklung zu den Windungen der
Sekundärwicklung des Serientransformators. Die
niedrigste, mit dieser Einrichtung erreichbare
Spannung, die die niedrigste verfügbare vorauseilende Blindleistung erzeugt, ist gleich:
Spannung der Zusatzwicklung zu neutral minus
Spannung der Zusatzwicklung zu neutral dividiert durch das Verhältnis der Windungen der
Primärwicklung zu den Windungen der Sekundärwicklung des Serientransformators. Die höchste
Spannung kann zum Beispiel fünfmal so hoch wie
die Netznennspannung gewählt werden, wenn die
di-elektrischen Umstände und die elektrischen
Bestimmungen es zulassen.

Ist das Netz ein Niederspannungsnetz mit einer
kleineren Spannung als 1,2 kV und ist mindestens
eine kapazitive Einrichtung eine feste kapazitive
Einrichtung für eine Hochspannung von insbesondere
15 kV, so beinhaltet vorteilhaft das separate Versorgungsnetz weiterhin einen Aufwärtstransformator,
der von dem Niederspannungsnetz gespeist wird und
dessen Ausgang vor die Sekundärwicklung des Serientransformators geschaltet ist. Damit ist eine Erhöhung der an den Kondensator angelegten Spannung
möglich, wobei eine sehr hohe Blindleistung kompensierbar wird. Die Kondensatornennspannung kann, im
Vergleich zu der Kondensatornennspannung bei Verwendung eines Spartransformators, noch höher gewählt
werden. Die zusätzlichen Kosten für einen weiteren
Transformator mit zwei Wicklungen, also für einen
Aufwärtstransformator, werden ganz oder zumindest
teilweise ausgeglichen durch die niedrigeren Kosten
für den Kondensator mit einer sehr hohen Nennspannung.

Hat das Netz eine höhere Spannung als 1,2 kV, also ab 1,2 kV bis 380 kV, so ist die Primärwicklung des Serientransformators vorteilhaft eine Niederspannungswicklung und der Stelltransformator weist zwei voneinander isolierte Wicklungen auf, von denen eine eine mit dem Netz parallel geschaltete Primärhochspannungswicklung ist, und die andere Wicklung des Stelltransformators eine Sekundärniederspannungswicklung mit variablem Ausgang ist, die die Primärwicklung des Serientransformators speist. Durch die Verwendung eines Stelltransformators mit zwei isolierten Wicklungen kann die dem Kondensator zugeführte Spannung kleiner als die Netz – Nennspannung gewählt werden. Es kann somit ein Kondensator mit kleinerer Nennspannung als der Netzspannung verwendet werden, um die Kosten zu reduzieren. Ein Kondensator mit kleinerer Nennspannung als der Netzspannung erweist sich insbesondere dann als kostengünstiger, wenn die zu kompensierende Blindleistung relativ gering ist.

Hat das Netz eine höhere Spannung als 1,2 kV, dann ist der Stelltransformator vorteilhaft ein Niederspannungsspartransformator, die Primärwicklung des Serientransformators eine Niederspannungswicklung und das separate Versorgungsnetz beinhaltet einen isolierten Zwei-Wicklungen-Transformator mit festem Übersetzungsverhältnis, dessen Primärhochspannungswicklung parallel zum Netz geschaltet ist und dessen Sekundärniederspannungswicklung den Stelltransformator speist. Dies ist eine alternative Einrichtung zu einem Stelltransformator, der von einer Primärhochspannungswicklung gespeist wird, wie oben beschrieben. Auch hier ist es möglich, einen Kondensator zu verwenden, dessen Nennspannung kleiner als die Netzspannung ist. Entsprechend den Gegebenheiten kann bei Vorhandensein eines Hochspannungsnetzes und einer kleinen zu kompensierenden Blindleistung die eine oder andere Alternative Anwendung finden.

Vorteilhaft ist ein vom Netz gespeistes Einschaltregelsystem vorgesehen, daß aus Spannungsmeßeinrichtungen mit nachgeschalteten Regeleinrichtungen,
aus Freigabeeinrichtungen und Nachfolgeeinrichtungen
besteht, wobei die Spannungsmeßeinrichtungen mit den
Regeleinrichtungen den Stelltransformator vom Netz
trennen, wenn die Leistung des Netzes abgeschaltet
wird, wobei dann der Stelltransformator zu einer
dämpfenden Last für die Primärwicklung des Serientransformators wird und die Sekundärwicklung des
Serientransformators zu einer Primärwicklung und
die Primärwicklung die Serientransformators zu
einer Sekundärwicklung wird, wobei gleichzeitig
zu dem Trennen des Stelltransformators von dem
Netz die Regelschleifen des separaten Versorgungsnetzes außer Betrieb gesetzt werden, wodurch keine
weitere kompensierende Blindleistung erzeugt wird;
die Freigabeeinrichtungen in Verbindung mit den
Nachfolgeeinrichtungen beim Einschalten der Leistung
des Netzes den Stelltransformator auf die kleinste
mögliche Spannung einstellen, den Stelltransformator
wieder an das Netz anschließen, wobei nachfolgend
die Primär- und Sekundärwicklung des Serientransformators wieder entsprechend ihrer ursprünglichen
Bestimmung geschaltet werden, die Nachfolgeeinrichtungen die Regelschleifen des separaten Versorgungsnetzes wieder freigeben und wieder eine
kontinuierlich geregelte kompensierende Blindleistung
erzeugt wird. Damit wird sichergestellt, daß die
Spannung, die dem Kondensator zugeführt wird,
zum Zeitpunkt der Leistungseinschaltung so niedrig
wie möglich eingestellt wird. Das Einschaltregelsystem verhindert ein explodieren der Kondensatoren,
wenn zum Beispiel nach einem Netzausfall die Blindleistungsregeleinrichtung wieder aktiviert wird.
Ohne dem Einschaltregelsystem würde dem Kondensator zu der bestehenden Ladung eine weitere zugefügt werden, wodurch der Kondensator überlastet und letztendlich zerstört werden würde.

Vorteilhaft sind Meßeinrichtungen und Kontrolleinrichtungen vorgesehen, wobei die Meßeinrichtungen
mit dem Netz verbunden sind und ein Signal erzeugen, welches proportional dem Differentialquotienten aus dem Stromquadrat zu der durch
die Last hervorgerufenen Blindleistung ist, die
Kontrolleinrichtungen mit Meßeinrichtungen und
den Regelschleifen des separaten Versorgungsnetzes verbunden sind und die kompensierende
Blindleistung derart regeln, daß der Differentialquotient aus dem Stromquadrat zu der durch die
Last hervorgerufenen Blindleistung praktisch
immer Null ist, wobei die Meßeinrichtungen Abtasteinrichtungen zur Ermittlung des im Netz
fließenden Stromquadrates und der kompensierenden
-Blindleistung, mit dem Netz verbundene Differentialmeßeinrichtungen zur Ermittlung des im Netz
fließenden Stromquadrates über die Zeit, mit der
Blindleistungsausgleichseinrichtung verbundene
Differentialmeßeinrichtungen zur Ermittlung der
kompensierenden Blindleistung über die Zeit und
an den Differential - Meßeinrichtungen angeschlossene logische Schaltkreise einschließlich
Teilereinrichtung, die ein zu dem Differentialquotienten aus dem Stromquadrat zu der durch die
Last hervorgerufene Blindleistung proportionales
Signal liefern, beinhalten und die Differentialen
Meßeinrichtung vorzugsweise aus Meßumformern,
Analog/Digital- und Digital/Anlogwandler, Verzögerungseinrichtungen und Subtraktoren bestehen.
Mit den Meßeinrichtungen und Kontrolleinrichtungen
wird eine Regelung auch bei nicht sinusförmiger
Spannung erreicht, wobei als Kriterium für die
Regelung der Differentialquotient aus dem Stromquadrat zu der durch die Last hervorgerufenen

- 22 -

15

Blindleistung Null gesetzt wird. Bei den vorhergehenden Erläuterungen hat man stillschweigend
vorausgesetzt, daß das beschriebene Gerät mit
der Grundfrequenz des speisenden Generators des
Elektrizitätsversorgungsunternehmens arbeitet.
Unter diesen Bedingungen kann ein Leistungsfaktorregelsystem mit stufenloser Regelung
zur Aufrechterhaltung eines konstanten Leistungsfaktors von 1,00 mit einer Genauigkeit von 0,25%
eingesetzt werden. Einen Leistungsfaktor von 1,00
zu erreichen, ist bedeutend, jedoch nur mit
sinusförmigen Spannungen, d. h. Spannungen, die
von der Sinusform mit nicht mehr als 2% Oberwellenanteil abweichen.

In heutigen Netzen sind Belastungen in vielen
Fällen nicht linear aufgrund des Einsatzes von
netzgeführten Stromrichtern, Thyristorgleichrichtern, unterbrechungsfreien Stromversorgungen
und anderen nicht linearen Schaltkreisen. Außerdem ist die Leistungsversorgung der Überlandleitungen unter den heutigen Bedingungen häufig
nicht sinusförmig. Durch diese veränderten Bedingungen hat man es zusätzlich noch mit Oberwellen der Grundfrequenz zu tun. Hier geht
es nicht mehr um einen Geräteleistungsfaktor,
sondern um nicht/linearen Lasten und nicht sinusförmige Spannungsversorgungen zu den Belastungen.

Dadurch bedingt hat man es nicht mit einer einzelnen Frequenz zu tun, sondern mit einer Vielzahl von
Frequenzen, nämlich Oberwellen der Grundfrequenz.
Die Minimierung des Energieverlustes auf Überlandleitungen und die Minimierung des Leistungsbedarfes und die
Maximierung der verfügbaren Leistung wird erreicht,
in dem das Verhältnis des Differentials des in der
Netzleitung fließenden Stromquadrates ($I^2$) zum Differential der kompensierenden Blindleistung (VAR)
gleich Null gesetzt wird; mathematisch ausgedrückt:
$dI^2/dVAR$ gleich Null, wobei I der gesamte, in der
Überlandleitung zur Last fließende Strom ist, plus
des zur Blindleistungsausgleichsvorrichtung fließenden
Stromes. Das Quadrat dieses Stromes ist proportional
zum tatsächlichen Wattverlust in der Netzleitung.
VAR ist die Blindleistung, die durch die Blindleistungregeleinrichtung kompensiert werden soll. Daher
setzt diese Erfindung neue Kriterien zur Minimierung
von Leistungsverlusten auf Überlandleitungen bei
nicht linearen Lasten oder von nicht sinusförmigen
Spannungen der Stromversorgung - als Ersatz zur
Erlangung eines Gerätefaktors "gleich eins" für
lineare Lasten oder zur Leistungsversorgung mit
sinusförmigen Spannungen.

Vorteilhaft sind Einrichtungen zur Ermittlung einer
entstehenden Anfangsresonanz, zur Resonanzunterdrückung
und Abschalteinrichtungen zum Stoppen der Zunahme der
kompensierenden Blindleistung vorgesehen, wobei die
Einrichtungen zur Ermittlung einer entstehenden Anfangsresonanz an das Netz angeschlossen sind und ein
Resonanzschwellenrelais, ein Resonanzkontrollrelais und
ein Zeitverzögerungsrelais beinhalten, daß das Resonanzschwellenrelais zwei Ruhekontakte aufweist, wobei der
erste Ruhekontakt bei Aktivierung der Einrichtungen zur
Ermittlung einer entstehenden Anfangsresonanz den
Stromkreis des DE-Motors für eine Zunahme der kompensierenden Blindleistung unterbricht, der
zweite Ruhekontakt in Reihe geschaltet ist mit
dem Resonanzkontrollrelais, ein Ruhekontakt des
Resonanzkontrollrelais in Reihe geschaltet ist
mit dem Zeitverzögerungsrelais vorgewählter
Verzögerungszeit; die Einrichtungen zur Resonanzunterdrückung eine in das Netz eingefügte Induktivität und einen Leistungsschütz beinhalten, der
Leistungsschütz einen Arbeitskontakt aufweist, der
in Reihe mit dem Arbeitskontakt des Zeitverzögerungsrelais geschaltet ist und normalerweise die Induktivität kurzschließt, bei Energiezufuhr nach Ablauf der vorgewählten Verzögerungszeit das Zeitverzögerungsrelais diesen Kurzschluß beseitigt.
Damit wird die zerstörerische Serienresonanz zwischen
der Überlandleitung dund dem Kondensator vermieden
und ein kontinuierlicher und sicherer Betrieb ermöglicht.

Die Erfindung wird anhand von bevorzugten Ausführungsbeispielen weiter beschrieben. Es zeigen:

Fig. 1         das Grundschema der Blindleistungsregeleinrichtung, welches ein Einphasen-
               Wechselstromsystem betriebfähig macht,

Fig. 2         ein Schema ähnlich Fig. 1, welches
               einen Zusatzspartransformator enthält, der eine Anpassung des Systems
               an eine wesentlich höhere Kondensatornennspannung und eine Reduzierung des
               unnötigen Grundanteils des Blindleistungskorrekturbereiches ermöglicht,

Fig. 3          ein Schema ähnlich Fig. 2 für ein Drei-
                phasen-System,

Fig. 4          eine alternative Lösung zu Fig. 1, welche
                einen Ringstelltransformator mit Mittelanzapfung enthält, um zu veranschaulichen,
                daß die Blindleistungsregeleinrichtung für
                begrenzte Leistungsbereiche auch mit sofort
                verfügbaren kommerziellen Komponenten realisiert werden kann,

Fig. 5          ein Ausführungsbeispiel, wenn das Netz ein
                Niederspannungsnetz ist, d. h. die Netzspannung kleiner als 1,2 kV ist, die zu
                kompensierende Blindleistung jedoch so
                enorm groß ist, daß es wirtschaftlich ist,
                einen Kondensator mit einer Nennspannung
                von größer als 1,2 kV zu verwenden, wobei
                ein Isoliertransformator mit zwei Wicklungen
                vorgesehen ist,

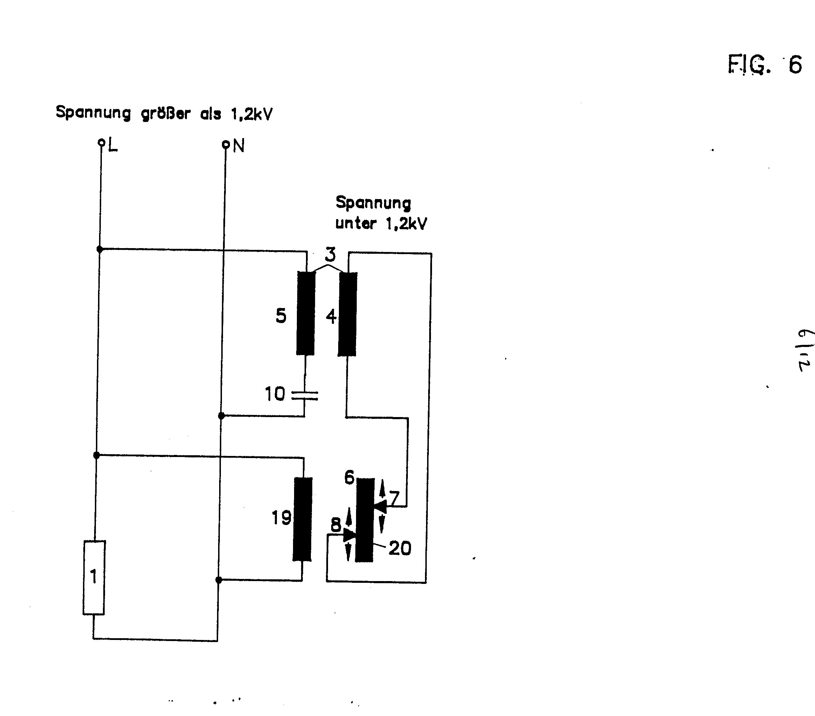

Fig. 6          ein Ausführungsbeispiel, bei dem das Netz
                ein Hochspannungsnetz ist, die Netzspannung
                jedoch 15 kV nicht überschreitet und der
                Stelltransformator ein Isoliertransformator
                mit zwei Wicklungen ist,

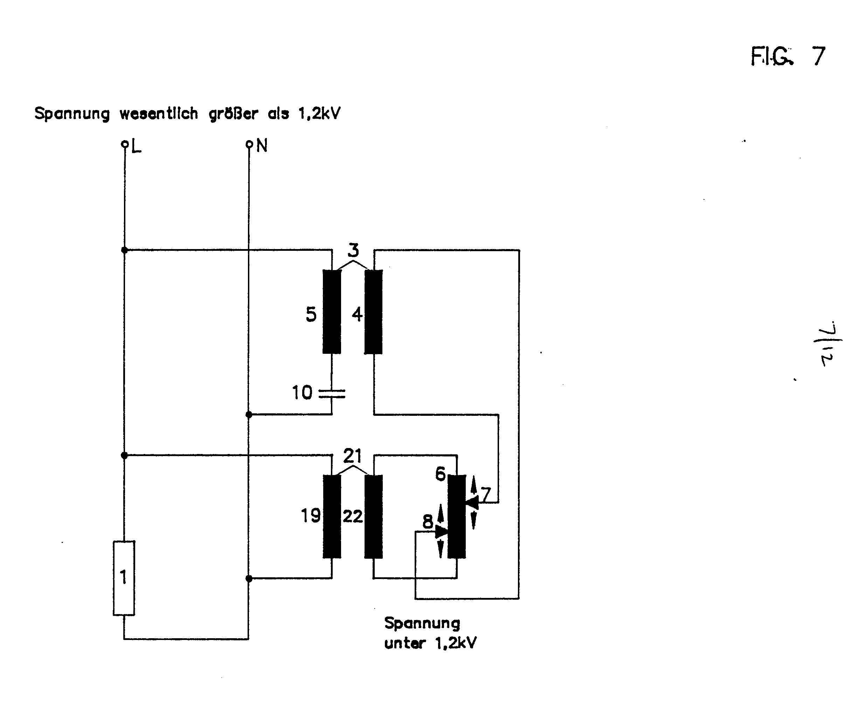

Fig. 7          eine Alternative zu Fig. 6, bei der ein
                Niederspannungsspartransformator verwendet
                wird, dieser aber von einem Isoliertransformator mit zwei Wicklungen gespeist wird, wobei der Isoliertransformator mit dem Hochspannungsnetz verbunden ist,

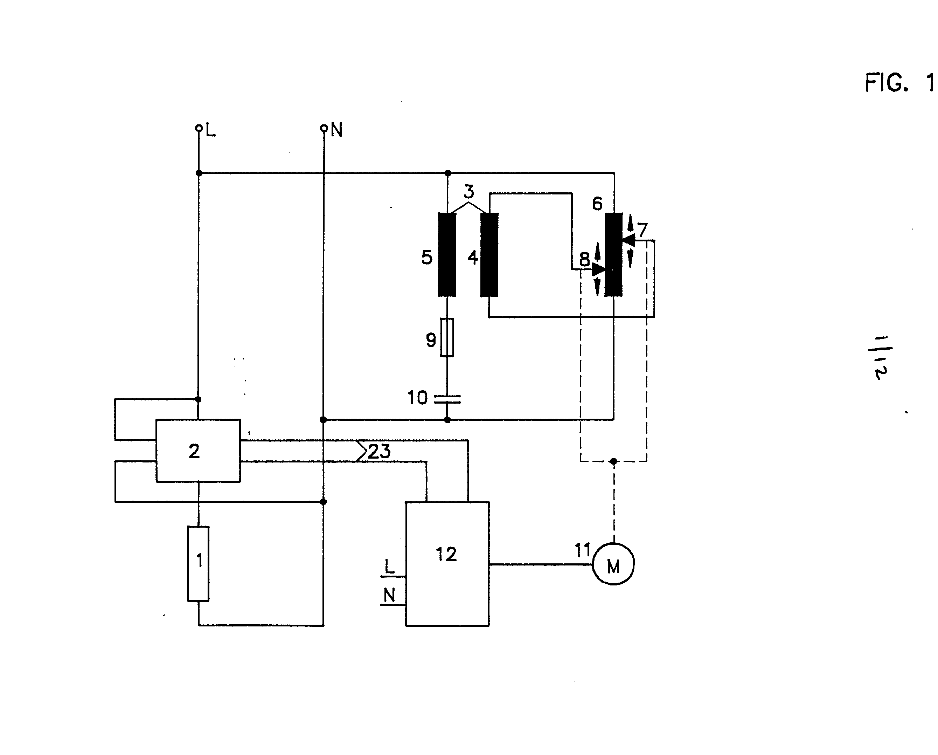

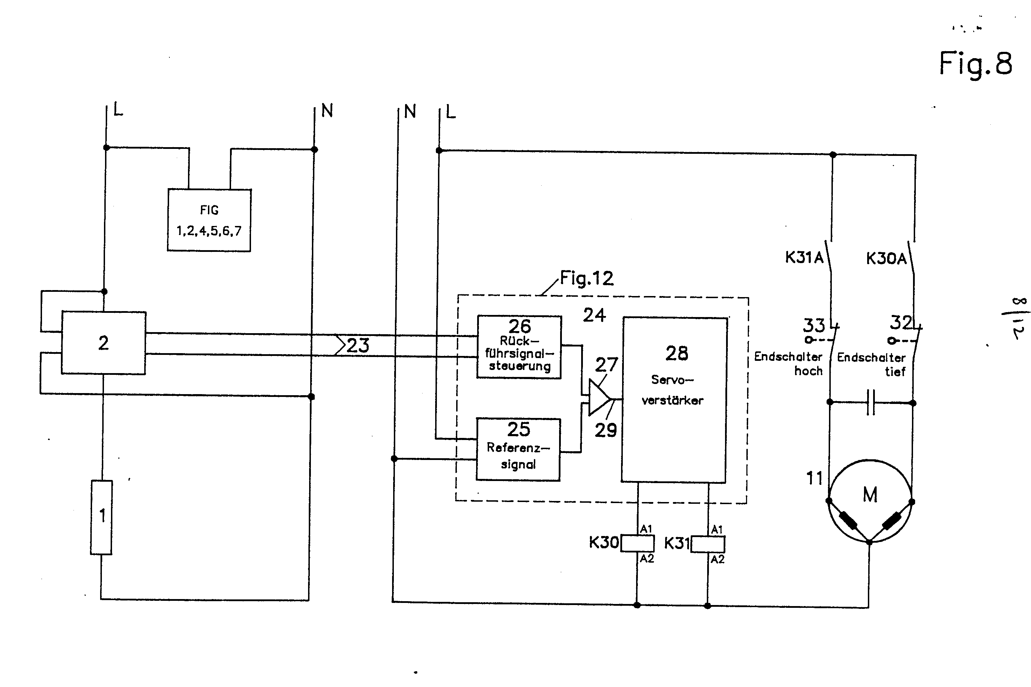

Fig. 8          die Regelschleifen für Fig. 1 bis Fig. 7,

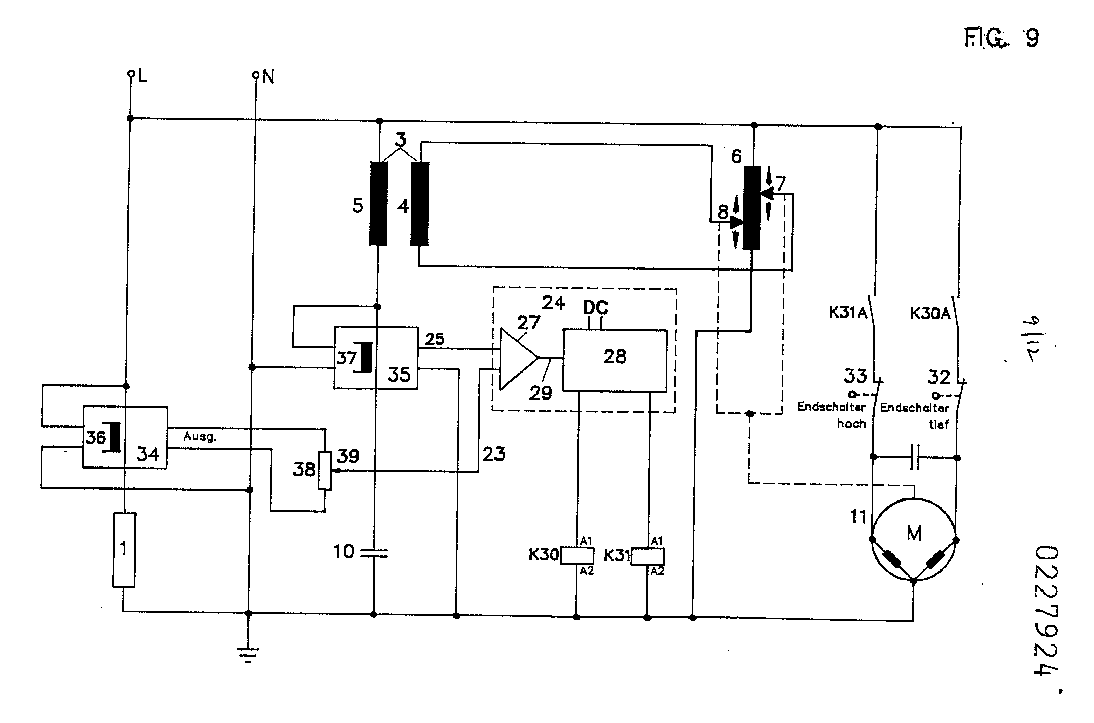

Fig. 9    eine Alternative zu Fig. 8,

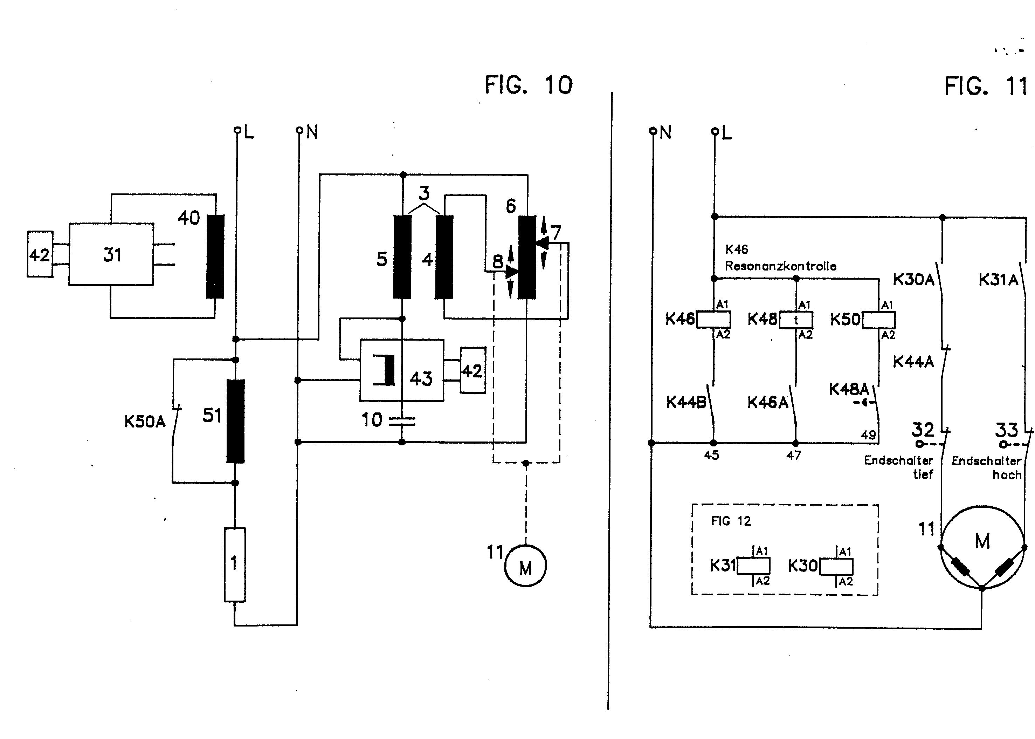

Fig. 10    ein Ausführungsbeispiel, angepaßt für nicht sinusförmige Spannungen und/oder nicht lineare Belastungen,

Fig. 11    ein Regelschaltkreis zur Vermeidung von Resonanzerscheinungen,

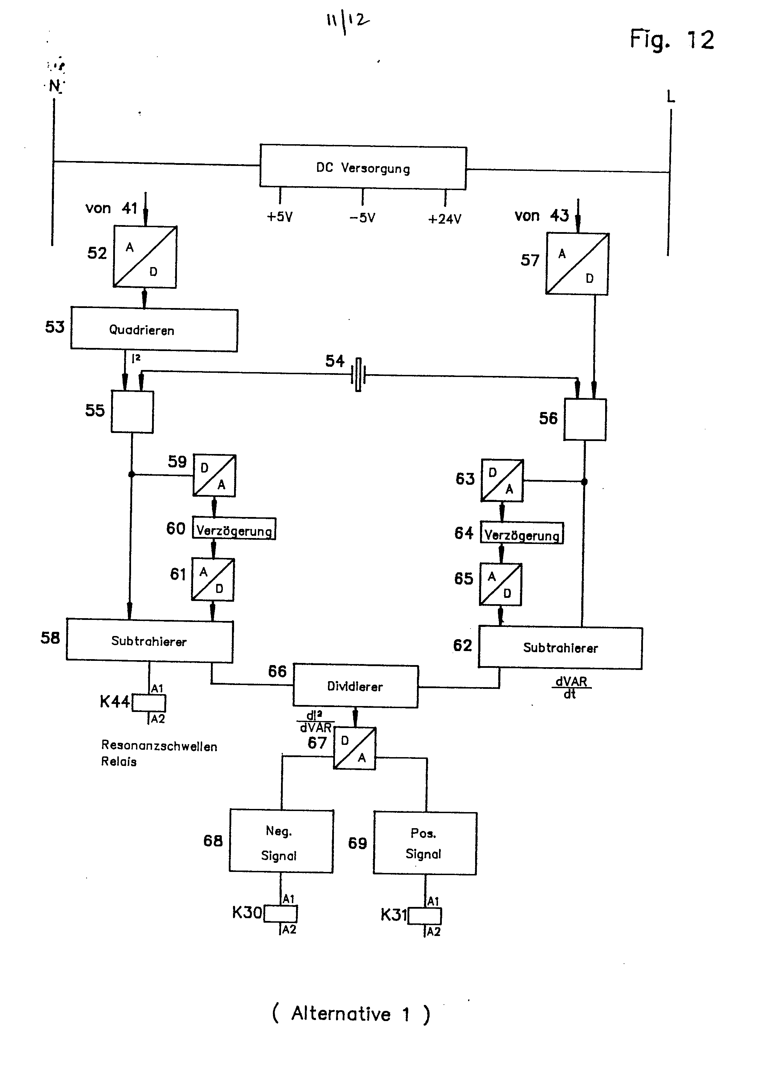

Fig. 12    ein Blockschaltbild eines Schaltkreises, um das Differential des Stromquadrates dividiert durch das Differential der Blindleistung zu ermitteln,

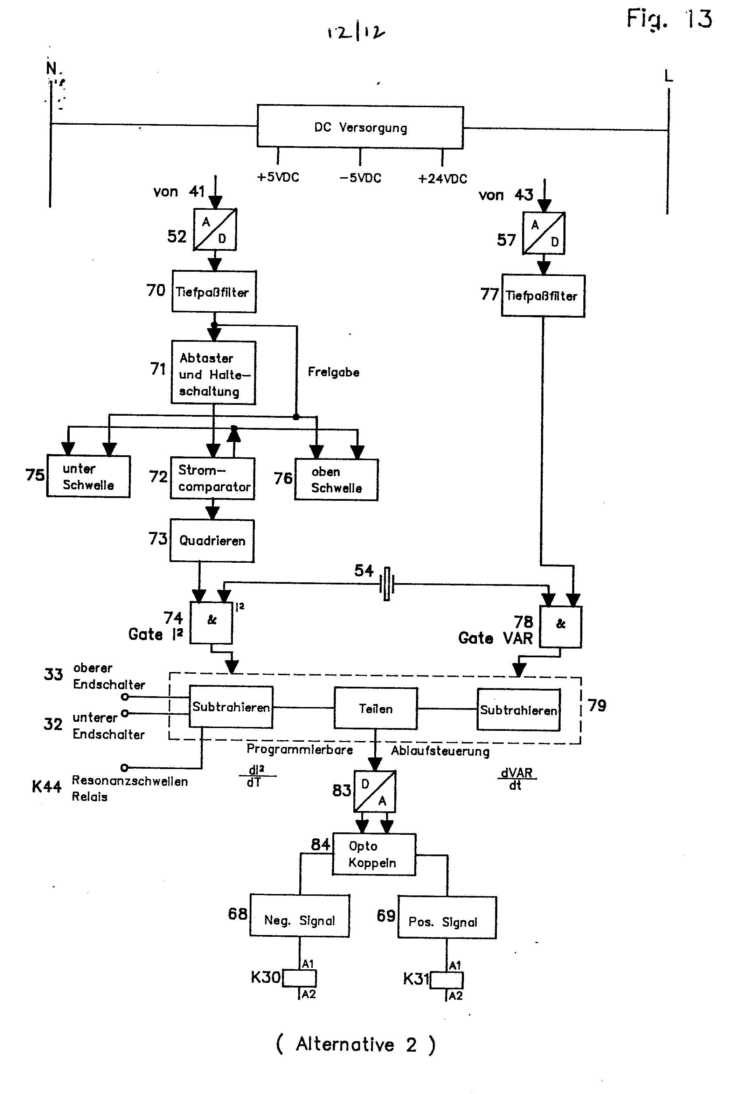

Fig. 13    ein alternatives Blockschaltbild zu Fig. 12.

Die nachfolgenden Ausführungsbeispiele finden sowohl bei sinusförmiger Netzspannung und/oder linearen Belastungen, sowie bei nicht sinusförmiger Netzspannung und/oder nicht linearen Belastungen Anwendung. Zum besseren Verständnis wird eine kurze Übersicht gegeben, welche Ausführungsformen bei den jeweiligen Gegebenheiten vorteilhaft Anwendung finden.

Bei sinusförmiger Netzspannung und/oder linearer Belastung, bei dem das Netz ein Einphasensystem ist, finden die Ausführungsbeispiele der Fig. 1, 2, 4, 5, 6 und 7 Anwendung. Es wird die durch die Last hervorgerufene Blindleistung, die meist nacheilend ist, von dem Blindleistungssensor gemessen und ein der Blindleistung proportionales Signal, das Rückführsignal, dem Blindleistungsregler zur Verfügung gestellt. In Verbindung mit einem Referenzsignal wird ein Fehlersignal ermittelt, welches einen Servoverstärker speist. Der Servoverstärker wiederum regelt über einen DC-Motor die Stellung der Stromabnehmer des Stelltransformators und bestimmt damit die kompensierende Blindleistung.

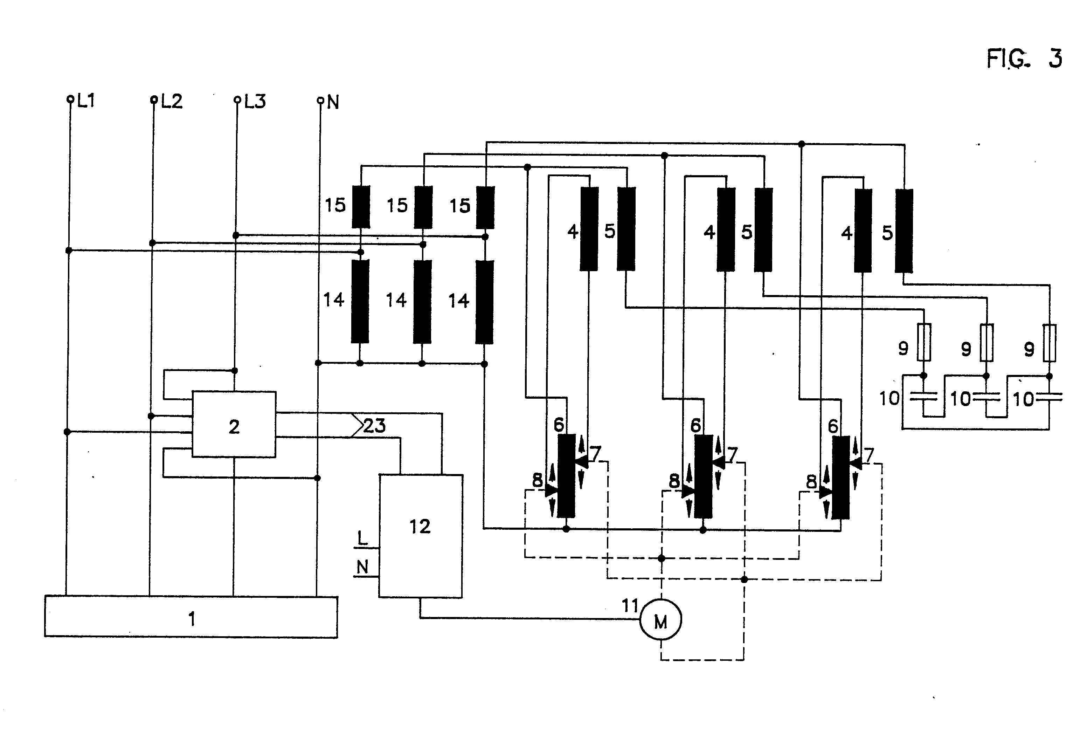

Bei sinusförmiger Netzspannung und/oder linearer
Belastung, wobei das Netz drei Phasen mit leitlich
gleichen Belastungen hat, findet das Ausführungsbeispiel der Fig. 3 Anwendung. Das Prinzip der
Regelung ist dasselbe wie bei einem Einphasensystem, die Regelung umfaßt hier jedoch die drei
Phasen des Netzes. Die durch die Last hervorgerufene
Blindleistung wird mittels eines Blindleistungssensors in nur einer Phase gemessen. Für jede Phase
des Netzes ist ein separater Stelltransformator
vorgesehen, deren Stromabnehmer von dem DC-Motor
positioniert werden. Dieses System sollte bei
ausgeglichener Phasenbelastung angewand werden, wie
zum Beispiel in einzelnen oder mehreren Drei-Phasen-
Asynchronmotoren oder in Synchromotoren. Falls der
Strom nicht kompensiert ist, sollte der Blindleistungssensor anstelle eines Stromkreises drei Stromkreise
haben. Mit seinem Ausgang führt der Blindleistungssensor dem Servoverstärker dann die dreiphasige
Blindleistung zu, die als Rückführsignal für den
Servoverstärker verwendet wird, der mit seinem Ausgang die Stellung des DC-Motors regelt, der die
Drei-Phasen-Stromabnehmer des Drei-Phasen-Stelltransformators  positioniert, um einen Drei-Phasen-Parallelmittelwert zu erzeugen. Dieses System eignet sich für
dreiphasige Belastungen, die nicht ganz symmetrisch
sein müssen.

Bei sinusförmiger Netzspannung und drei Netzphasen,
wobei die einzelnen Netzphasen total ungleiche Belastungen haben, findet das Ausführungsbeispiel der
Fig. 1 Anwendung, wobei jedoch die dort dargestellte
Blindleistungsregeleinrichtung für jede einzelne
Phase vorzusehen ist. Solche ungleichen Belastungen
der einzelnen Phasen treten dann auf, wenn die gesamte
am Netz angeschlossene Last aus separaten, unabhängigen,
hochinduktiven, individuellen Lasten mit geringem
Leistungsfaktor besteht. Dies tritt beispielsweise
bei Nahtschweißanlagen (Widerstandsschweißung) auf, wenn die Nahtschweißanlagen aus einzelnen Widerstandsschweißeinrichtungen bestehen, in denen jede einzelne Einphasen-Last einen Leistungsfaktor von nur 0,4 bis 0,6 hat und in denen jede einzelne Einphasen-Last Spannungsabfall, Wattverluste und Reduzierung der verfügbaren Betriebsleistung hervorruft. Durch die individuelle Kompensation der durch die Last hervorgerufenen Blindleistung in den einzelnen Phasen können bedeutende Energieeinsparungen und eine wesentliche Erhöhung der verfügbaren Betriebsleistung erreicht werden.

Bei nicht sinusförmigen Netzspannungen und nicht linearen Belastungen kann prinzipiell das in Fig. 1 dargestellte separate Versorgungsnetz verwendet werden, wobei die Regelschleifen entsprechend Fig. 10, 11 und in der Ergänzung Fig. 12 sowie alternativ Fig. 13 auszuführen sind. Bei nicht sinusförmiger Netzspannung und/oder bei nicht linearen Lasten führt der Geräteleistungsfaktor nicht mehr zur Optimierung von Leistungsverbrauch, Leistungsbedarf und Leistungsverfügbarkeit. Daher sollte bei nicht sinusförmiger Netzspannung und/oder nicht linearen Lasten anstelle eines guten Geräteleistungsfaktors ein System angestrebt werden, welches die Wattverluste stromaufwärts zur Last minimiert, den Leistungsverbrauch minimiert und die verfügbare Leistung maximiert.

Fig. 1 zeigt die vereinfachte Darstellung der Blindleistungsregeleinrichtung für ein Einphasen-System mit L als Phase und N als Mittelpunkts- oder Neutralleiter. Das System speist eine Last 1, die teilweise induktiv ist und Kompensierung mit einer vorauseilenden Blindleistung erfordert. Die durch die Last hervorgerufene Blindleistung wird von einem Blindleistungssensor 2 gemessen, der in Reihe mit der Last 1
geschaltet ist. Die Blindleistungskompensation
wird durch einen Parallel-schaltkreis erreicht,
der einen Serientransformator 3 mit festem
Übersetzungsverhältnis zwischen der Primärwicklung 4 und der Sekundärwicklung 5, einen
Stelltransformator 6 mit zwei Stromabnehmern 7
und 8, einer Sicherung 9 und einem Kondensator 10
umfaßt. Die Sekundärwicklung 5 des Serientransformators 3 mit festem Übersetzungsverhältnis
ist in Reihe geschaltet mit der Sicherung 9
und dem Kondensator 10. Die Primärwicklung 4
des Serientransformators 3 wird über die Stromabnehmer 7 und 8 des Stelltransformators 6 gespeist. Der Stelltransformator 6 ist ein Säulentransformator, dessen Stromabnehmer 7 und 8
vorzugsweise mit Kohlerollen bestückt sind, die
auf den Windungen des Säulentransformators
gleiten. Diese Stromabnehmer 7 und 8 werden von
einem DC-Motor 11 über Kegelrad und Antriebsspindeln in der Weise angetrieben, daß, wenn der
Stromabnehmer 7 sich nach oben bewegt, der Stromabnehmer 8 mit derselben Geschwindigkeit in die
entgegengesetzte Richtung geht. Die Stromabnehmer 7
und 8 befinden sich um 180° versetzt auf dem Umfang
der Wicklungsoberfläche des Stelltranformators 6,
so daß, wenn der Stromabnehmer 7 vorne auf der
Wicklungsoberfläche gleitet, der Stromabnehmer 8
in entgegengesetzer Richtung auf der Rückseite der
Wicklungsoberfläche gleitet. Der Stelltransformator 6
wird über die festen Anschlpsse des Netzes L-N gespeist.
Wenn die Stellung des Stromabnehmers 7 mit der des
Stromabnehmers 8 zusammentrifft, stehen beide auf
derselben Windung des Stelltransformators 6, und
die sich ergebende Spannung über Stromabnehmer 7 und 8
wird null. Wenn der Stromabnehmer 7 ein Ende der
Wicklungssäule, zum Beispiel oben, erreicht hat und dementsprechend der Stromabnehmer 8 das untere
Ende erreicht hat, wird die Spannung zwischen
den Stromabnehmern 7 und 8 gleich der Netzspannung, und die Netzspannung wird in die
Primärwicklung 4 des Serientransformators 3
gespeist. Diese Spannung induziert eine bestimmte Spannung in die Sekundärwicklung 5 des
Serientransformators 3, wobei die Spannungsgröße von dem Übersetzungsverhälnis der Primärwicklung 4 zur Sekundärwicklung 5 abhängig ist.
Wenn dieses Verhältnis 1:1 ist, wird die vom
Netz kommende Spannung plus der der Primärwicklung 4 des Serientransformators 3 doppelt
so groß wie die Netzspannung. Aus demselben
Grunde wird bei Zusammentreffen der Stromabnehmer 7 und 8, d. h. wenn sie sich in der
Mitte der Wicklungssäule gegenüberstehen, die
Spannung plus der Sekundärspannung des Serientransformators 3 gleich der Netzspannung.
Bei jeglicher Stellung der Stromabnehmer 7
und 8 zwischen Mitte und oberem Ende der
Wicklungssäule variiert die dem Kondensator 10
zugeführte Spannung zwischen der Größe der
Netzspannung und der höchsten verfügbaren
Spannung von der Sekundärwicklung 5 des
Serientransformators 3. Die Spannung kann
nach Belieben verändert werden, zum Beispiel
manuell, durch Druckknopfsteuerung oder automatisch durch Regelschleifen 12, die mit dem
Blindleistungssensor 2 und dem DC-Motor 11
verbunden sind. Die Spannungsänderung kann in
beiden Fällen in unendlich kleinen Schritten
durchgeführt werden und erzeugt dadurch eine
extrem genaue kompensierende Blindleistung.

Wenn der Stromabnehmer 7 das untere Ende der
Wicklungssäule des Stelltransformators 6 erreicht und der Stromabnehmer 8 in diesem Fall
das obere Ende, ist die Größe der verfügbaren
Spannung zwischen den Stromabnehmern 7 und 8
wiederum entsprechend der Netzspannung aber
mit umgekehrter Polarität. Die umgekehrte
Polarität kehrt die Richtung des magnetischen
Flusses in dem Serientransformator 3 um, mit
der Konsequenz, das die in der Sekundärwicklung 5
des Serientransformators 3 induzierte Sapnnung
nicht mehr zur Netzspannung addiert, sondern
subtrahiert wird. Ist das Windungsverhältnis
des Serientransformators 3 1:1 und der Stromabnehmer 8 erreicht das obere Ende, wird die
dem Kondensator 10 zugeführte Spannung Null,
und entsprechend der Stellung der Stromabnehmer 7
und 8 kann der gesamte Spannungsbereich von Null
bis zur doppelten Netzspannung erreicht werden.

Die dem Kondensator 10 zugeführte Spannung und
damit die kompensierende Blindleistung ist in
einem Bereich variierbar, der von Maximum bis
herunter zu Null reicht. Diese untere Grenze
ist in der Praxis jedoch niemals erforderlich.
Vorteilhaft kann mit der Blindleistungsausgleichseinrichtung diese untere Grenze nach oben verschoben werden, wodurch die Größe und folglich
auch die Kosten reduziert werden.

Eine weitere Einsparung der Kosten ist durch
die Möglichkeit gegeben, einen Kondensator 10
mit hoher Nennspannung zu verwenden. Es ist bekannt, je höher die Nennspannung des Kondersators 10
ist, desto niedriger ist seine Kapazität in Mikrofarat bei gleicher Leistung und folglich desto
niedrigeren Preis.

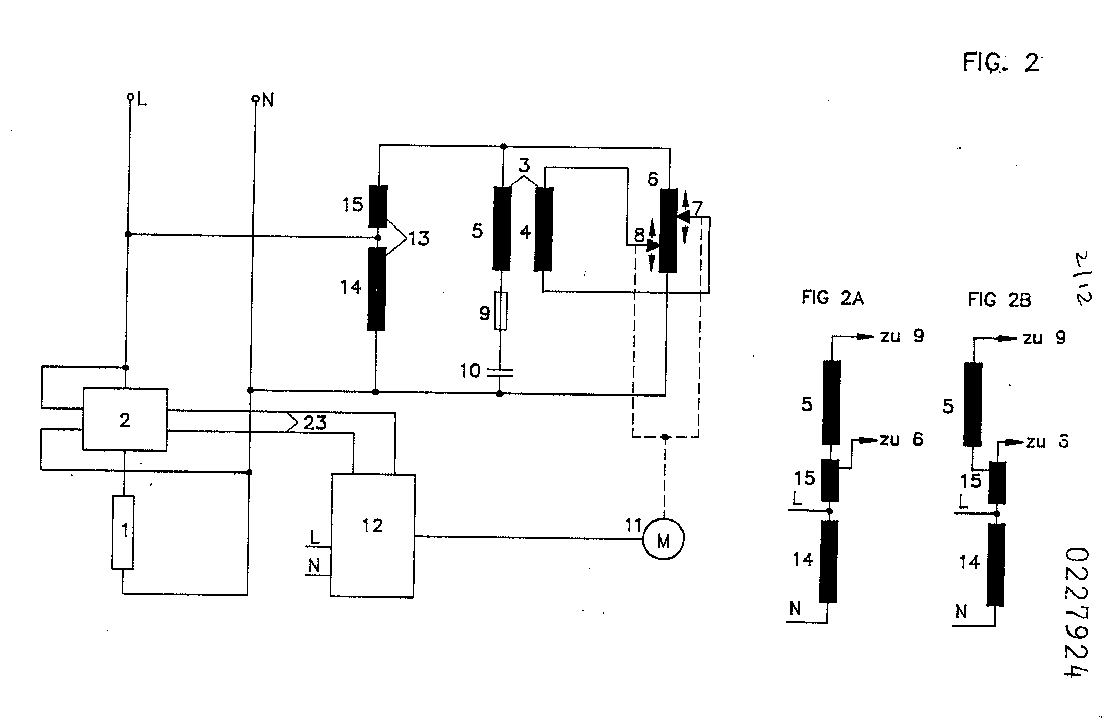

In Fig. 2 ist zusätzlich zu dem Serientransformator 3 und dem Stelltransformator 6 ein Spartransformator 13 mit der Grund- oder Primärwicklung 14 und der Zusatzwicklung 15 vorgesehen. Die Grundwicklung 14 ist parallel zum Netz angeschlossen, die Zusatzwicklung 15 des Spartransformators 13 ist mit dem Serientransformator 3 verbunden. Dies ist nicht unbedingt erforderlich. Fig. 2A zeigt eine Variante, in der der Stelltransformator 6 von einer Anzapfung der Zusatzwicklung 15 des Spartransformators 13 gespeist wird, d. h. von einem Potential, welches niedriger als in Fig. 2 ist. Das niedrigste praktikable Potential ist der Punkt, an dem die Grundwicklung 14 des Spartransformators 13 an die Zusatzwicklung 15 angeschlossen ist. Fig. 2B stellt eine Variante dar in der der Stelltransformator 6 von einem Potential gespeist wird, welches höher ist als das in Fig. 2.

Fig. 3 stellt dasselbe System wie Fig. 2 dar, jedoch angepaßt an ein dreiphasiges Vier-Leiter-Netz. Alle Transformatoren sollten vorzugsweise dreiphasig oder in Ringausführung sein. Ansonsten ist die Funktionsweise dieselbe, wie in Fig. 2 beschrieben.

Die Regelschleifen 12 sind dieselben wie in Fig. 1 und 2. Der Blindleistungssensor 2 ist in Fig. 2 in einer Ausführung dargestellt, die auch für ein ausgeglichenes Vier-Leiter-Netz gilt. Für ungleichmäßige Belastungen der einzelnen Netzphasen L1, L2, L3 ist ein Blindleistungssensor 2 entsprechend der hier gezeigten Ausführung zu verwenden. Der Blindleistungssensor 2 hat einen einfach Strompfad in der unterbrochenen Leitung der Netzphase L3. Weiterhin besitzt er drei Spannungszuführungen, die eine von der Netzphase L1 zu neutral, die zweite von der Netzphase L2 zu
neutral und die dritte von der Netzphase L3
zu neutral. In einem dreiphasigen Vier-Leiter-
Netz mit unausgeglichener Last sind diese drei
Spannungszuführungen erforderlich, aber auch
drei Strompfade, das bedeutet, daß alle drei
Phasen L1, L2, L3 in der Weise, wie für Phase
L3 dargestellt, unterbrochen werden. In einem
dreiphasigen Drei-Leiter-Netz mit ausgeglichener
Last benötigt man dagegen nur einen Strompfad
und auch nur einen Spannungspfad.

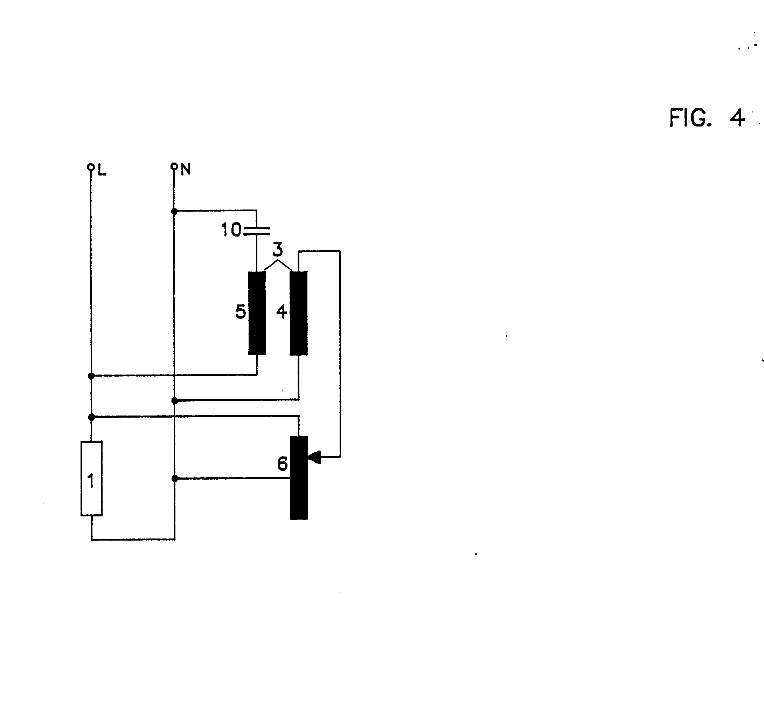

In Fig. 4 ist der Stelltransformator 6 als
Ringstelltransformator in Sparschaltung mit
Mittelanzapfung ausgeführt. Solch ein Ringstelltransformator 6 bietet den Vorteil, das
er einerseits preiswert und andererseits handelsüblich ist. Allerdings besitzt er nur eine begrenzte Leistungsgröße und bei eventueller Parallelschaltung muß eine Leistungsreduzierung der einzelnen
Ringstelltransformatoren 6 erfolgen.

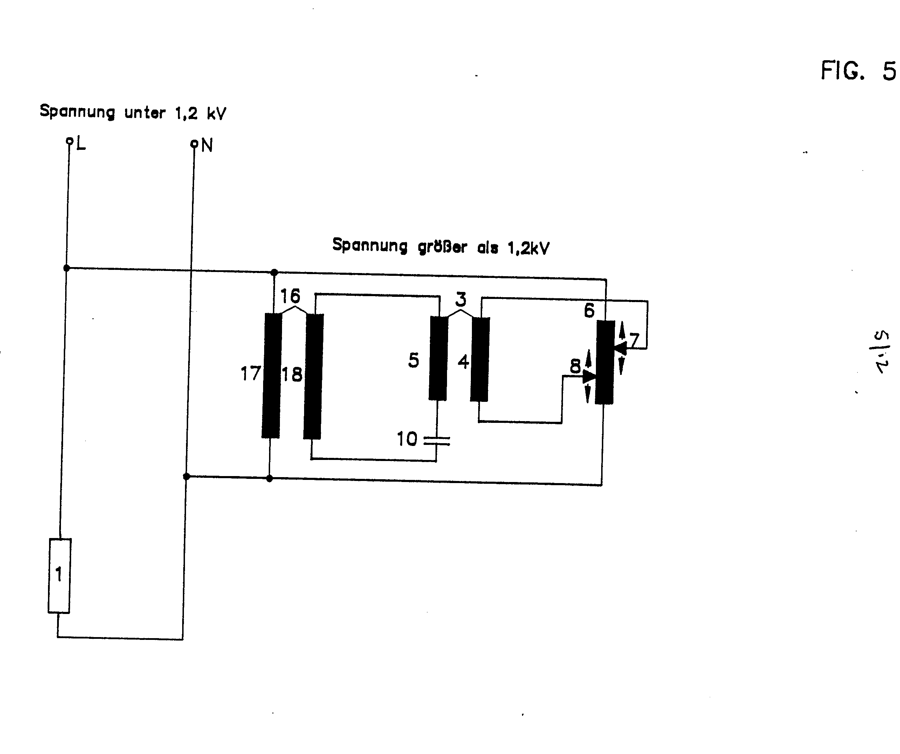

Die Fig. 5 zeigt eine Lösung, bei der die Netzspannung innerhalb des Niederspannungsbereiches
bleibt, d. h. unter 1,2 kV, während aus Kostengründen ein Kondensator 10 als Hochspannungskondensator, zum Beispiel 15 kV, vorgesehen ist. Das
System ist ähnlich dem in Fig. 1 dargestellten
System, außer das ein Aufwärtstransformator 16
mit der Primärwicklung 17 und der Sekundärwicklung 18 eingefügt worden ist, wobei die Primärwicklung 17 die Niederspannungswicklung und die
Sekundärwicklung 18 die Hochspannungswicklung ist.
Der Schaltkreis der Sekundärwicklung 18 ist von
dem der Primärwicklung 17 entsprechend isoliert.
Der einzige Nachteil bei Verwendung eines Aufwärtstransformators 16 sind die zusätzlichen Kosten für diesen Transformator, die höher sind
als für einen Spartransformator 13. Diese zusätzlichen Kosten werden jedoch ganz oder zumindest teilweise ausgeglichen durch die niedrigeren
Kosten für den Kondensator 10 für eine noch höhere
Spannung als zum Beispiel bei Fig. 2.

Fig. 6 stellt einen Fall dar, wo die Netzspannung
eine Hochspannung, beispielsweise 15 kV ist. Es
wird ein Stelltransformator 6 mit zwei Wicklungen,
einer Primärhochspannungswicklung 19 und einer
Sekundärniederspannungswicklung 20, eingesetzt.

In Fig. 7 ist neben dem Serientransformator 3
und dem Stelltransformator 6 ein Zwei-Wicklungen-
Transformator 21, mit der Primärhochspannungswicklung 19 und der Sekundärniederspannungswicklung 22, vorgesehen. Die Primärhochspannungswicklung 19 und die Sekundärniederspannungswicklung 2  speisen den Stelltransformator 6, der
als Niederspannungstransformator ausgebildet ist.
Durch diese Anordnung wird an den Kondensator 10
eine niedrigere Spannung angelegt, als sie im
Netz vorhanden ist.

Fig. 8 zeigt eine detaillierte Darstellung der
Regelschleifen 12. Der DC-Motor 1 treibt die
Stromabnehmer 7 und 8 (hier nicht dargestellt)
an, d.h. Stromabnehmer 7 nach oben und 8 nach
unten, wenn der DC-Motor 11 rechts dreht, Stromabnehmer 8 nach oben und 7 nach unten, wenn er links
dreht. Der DC-Motor 11 verursacht rechtsdrehende
(zunehmen) und linksdrehende (abnehmend) Windungspositionen. Der Blindleistungssensor 2 hat einphasig
zwei Stromklemmen, die in die Netzleitung L eingefügt
sind. Er hat zwei Potentialklemmen, eine ist an die
Netzleitung L angeschlossen, die andere an neutral N.

Übertragungswandler sind der Einfachheit halber
und zum besseren Verständnis weggelassen, obwohl
in der Praxis die Stromerfassung über einen Stromwandler unerläßlich ist, und in vielen Fällen ist
ein Spannungswandler erforderlich. Das von dem
Blindleistungssensor 2 erzeugte Rückführsignal 23
wird von dem Blindleistungsregler 24 aufgenommen.
Der Blindleistungsregler 24 hat ein von der Regelspannung L, N gespeistes Referenzsignal 25. Üblicherweise hat dieses Referenzsignal 25 Z-Dioden
und am Ausgang eine Potentiometereinstellung.
Der Blindleistungsregeler 24 beinhaltet weiterhin
eine Rückführsignalsteuerung 26, die das Rückführsignal 23 vom Blindleistungssensor 2 aufnimmt,
einen Komperator 27 und einen Servoverstärker 28.
In dem Komperator 27 werden das Referenzsignal 25
und das Rückführsignal 23 verglichen und es wird
ein positives oder negatives Fehlersignal 29 erzeugt. Das Fehlersignal 29 wird danach in den Servoverstärker 28 geleitet. Das gesteuerte und vertärkte Signal speist entweder die Spule des Relais
K 30 (fallend) oder die Spule des Relais K 31
(steigend). Wenn die Spule des Relais K 30 gespeist
wird, schließt sich der entsprechende Arbeitskontakt K 30A. Dadurch fließt der Strom von Regelspannung L über eine normalerweise geschlossenen
Endschalter 32 zu derjenigen Wicklung des DC-Motors 11,
der eine Linksdrehung bewirkt. Durch die Drehung des
DC-Motors 11 gleitet der Stromabnehmer 7 nach unten
und der Stromabnehmer 8 nach oben, was eine Reduzierung
der dem Kondensator 10 zugeführten Spannung verursacht.
Die Drehung stoppt, wenn die Blindleistungskompensation
den eingestellten Wert erreicht hat, und zu diesem Zeitpunkt wird das Fehlersignal 29 fast Null, und zwar so
nahe an Null, wie es die Nenngenauigkeit des Blindleistungsreglers 24 zuläßt. Wird das Fehlersignal 29 Null, so
wird die Spule des Relais K 30 spannungslos, der entsprechende Kontakt K 30A öffnet sich, die Speiseleitung zu der "linksdrehenden" Wicklung des DC-Motors 11 wird unterbrochen, der DC-Motor 11 stoppt, ebenso
die Bewegung der Stromabnehmer 7 und 8, die Spannungsänderung und die Blindleistungskorrektur. Danach
ist der Prozeß der Leistungsfaktorkorrektur praktisch
abgeschlossen. Alle diese Vorgänge stoppen auch,
wenn die Stromabnehmer 7 und 8 ihre mechanische Endposition erreichen und dabei die normalerweise geschlossenen Endschalter 32/33 öffnen.

Fig. 9 zeigt eine alternative Ausführung der Regelschleifen 12. Es werden zwei Blindleistungssensoren
34 und 35 verwendet, die nicht unbedingt vom gleichen
Typ sein müssen. Der Blindleistungssensor 34 wird
in den Lastkreis eingefügt und ermittelt die Größe
der durch die Last hervorgerufenen Blindleistung
und ob diese vorauseilend oder nacheilend ist. Der
Blindleistungssensor 35 wird in den Parallelschaltkreis zur Blindleistungskompensation eingefügt und
ermittelt dementsprechend die Größe der kompensierenden Blindleistung und ob sie mit Bezug auf
die Netzspannung vorauseilend oder nacheilend ist.
Die Blindleistungssensoren 34 und 35 sind jeder
mit einem Spannungssensor versehen, der in einem
Spannungswandler endet. Der Klarheit halber werden
in Fig. 9 nur die Spannungsfühlerleitungen und
deren Anschlüsse gezeigt. Die Blindleistungssensoren
34 und 35 besitzen jeweils einen Stromwandler 36
und 37, der als Spule dargestellt ist. Der Blindleistungssensor 34 wird durch einen Potentiometer 38
gebürdet, wodurch ein gegebenes Rückführsignal 23
stufenweise reduziert werden kann. Das volle Rückführsignal 23 weist auf die gesamte, von der Last
erzeugte Blindleistung hin. Der Abnehmer 39 des
Potentiometers 38 ist an einen der beiden Eingänge
des Komparators 27 angeschlossen. Das System ist
so angeordnet, das bei voller Einregelung des
Abnehmers 39 der korrigierte Leistungsfaktor gleich Eins wird. Je weiter der Abnehmer 39 von seiner Position "voller Ausgang" entfernt wird,
desto niedriger wird der regulierte Leistungsfaktor.
Der Blindleistungssensor 35 ist in dem Parallelschaltkreis für die kompensierende Blindleistung
eingefügt. Er erzeugt ein Referenzsignal 25 welches
in dem Komparator 27 mit dem Rückführsignal 23
von dem Abnehmer 39 verglichen wird. Der Komparator 27
erzeugt daraus ein positives oder negatives Fehlersignal 29. Bei solch einer Anordnung kann auf einen
Z-Dioden-Regler    verzichtet werden, wordurch
eine höhere Genauigkeit erreicht wird.

Die durch die Last hervorgerufene Blindleistung
und die kompensierende Blindleistung werden direkt
durch die Blindleistungssensoren 34 und 35 gemessen
und miteinander verglichen. Weiterhin ist dieses
System nicht abhängig von der Sinusform oder der
Frequenz der Netzspannung.

Fig. 9 zeigt ein Ausführungsbeispiel einer Blindleistungsausgleichseinrichtung für ein Ein-Phasen-Netz.
Bei mehrphasigen Netzen ist es ähnlich, sie werden
entsprechend der individuellen Problemstellung ausgeführt. So ist bei dreiphasiger Last in Dreiecksschaltung der Meßumformer für die Last vorzugsweise
ein Zweifach-Meßumformer und dasselbe gilt für den
parallel liegenden Kompensationskreis. Bei dreiphasiger
Last in Sternschaltung ist das System hinsichtlich
der Leistung wie in Fig. 3 angeschlossen; der Last-
Meßumformer ist vorzugsweise ein Dreifachmeßumformer,
während für den parallel liegenden Kompensationskreis
ein Zweifach-Meßumformer ausreicht, sogar für ungleichmäßige Last. Für Belastungen, die ganz aus einphasigen,
ungleichmäßigen Lasten bestehen, werden drei Einphasen-
Blindleistungsausgleichseinrichtungen mit drei einzelnen
Blindleistungssensoren per Last bzw. per parallel liegendem Kompensationskreis verwendet.

Anstelle der elektromechanischen Relais K 30 und K 31 können elektronische Relais verwendet werden. Zur Sicherheit werden die "auf "-"ab"-Relais unter Verwendung von Hilfskontakten verriegelt, um den Regelschaltkreis schaltsicher zu machen. Eine weitere Verbesserung bietet ein zusätzliches P-I-D (Proportional-Integral-Differential) Modul innerhalb des Bereiches für Signalregelung und -vertärkung.

Ebenso kann natürlich auch ein Mikroprozessor verwendet werden. Dieser würde dann die nacheilende Blindleistung plus der vorauseilenden Blindleistung abtasten unter Verwendung einer Drei-Punkt-Regelung, in dem der Regelprozeß unterbrochen wird, bis sich das Verhältnis der vorauseilenden zur nacheilenden Blindleistung geändert hat. Für die Regelung kann auch ein Mikrocomputer verwendet werden.

Fig. 10 ist eine Modifikation der Grundschaltung von einer Phase eines Drei-Phasen-Systems. Es ist ein Stromwandler 40 in die Netzleitung L eingefügt, dessen Sekundärwicklung einen handelsüblichen Wechselstrom-Umformer 41 speist. Der Wechselstromumformer 41 liefert ein dem Laststrom der Netzleitung L proportionales Signal an Meßeinrichtungen 42, die in Fig. 12 näher beschreiben sind. Weiterhin ist in die Netzzuleitung L ein Induktivität 51 zur Resonanzunterdrückung eingefügt, die normalerweise über den Kontakt des Schützes K 50A kurzgeschlossen ist.

In dem Parallelschaltkreis· zur Blindleistungskompensation  ist  ein  Stelltransformator 6
in  Sparschaltung  eingefügt,  welcher  die
Primärwicklung 4 des Serientransformators 3 mit
festem Übersetzungsverhältnis speist und dessen
Sekundärwicklung 5 wiederum mit dem Kondensator 10
in Reihe geschaltet ist. Im Schaltkreis des Kondensators 10 ist der Strompfad eines Blindleistungssensors 43 eingefügt, dessen Spannungspfad an den
Klemmen des Kondensators 10 angeschlossen ist. In
der Praxis wird in den Strompfad ein weiterer Stromwandler eingefügt, der hier der Klarheit wegen weggelassen worden ist. Der Ausgang des Blindleistungssensors 43 liefert ein Signal, welches proportional
der kompensierten Blindleistung ist und den in Fig. 12
beschriebenen Meßeinrichtung 42 zugeführt wird.


Fig. 11, eine weitere Darstellung von Fig. 9, zeigt
den Kreis des DC-Motors 11,      der die Stromabnehmer 7 und 8 des Stelltransformators 6 in Sparschaltung entsprechend Fig. 10 oder Fig. 1 antreibt.
Die Spule des Relais K 30 hat einen Arbeitskontakt K 30A,
der die linksdrehende Wicklung des DC-Motors 11
speist. Die rechtsdrehende Wicklung des DC-Motors 11
wird von dem Arbeitskontakt K 31A der Spule des Relais K 31
gespeist.


Zur Vermeidung von zerstörerischer Serienresonanz
zwischen der Überlandleitung und dem Kondensator 10,
was eine ersthafte Gefahr bei Vorhandensein von höheren Oberwellen darstellt, ist eine Resonanzkontrolle
vorgesehen. Ein Resonanzschwellenrelais K44 nimmt
von den Meßeinrichtungen 42 ein Signal auf, welches
proportional dem Differentialquotienten aus dem
Stromquadrat zu der Zeit ist. Ein Ruhekontakt K 44A
des Resonanzschwellenrelais K 44, eingefügt in die
rechtsdrehende Leitung des DC-Motors 11 unterbricht dessen rechtsdrehende Funktion bei erreichen
einer vorgegebenen Schwelle. Ein zweiter Ruhekontakt
K 44B des Resonanzschwellenrelais K 44 speist zur
gleichen Zeit in einem separaten Schaltkreis 45 ein
Resonanzkontrollrelais K 46. Bei Speisung des Resonanzkontrollrelais K 46 schließt sich in einem zweiten
separaten Schaltkreis 47 der Ruhekontakt K 46A und
speist ein Zeitverzögerungsrelais K 48. Nach Ablauf
einer vorgegebenen Verzögerungszeit schließt sich
in einem dritten separaten Schaltkreis 49 der Ruhekontakt K 48A des Zeitverzögerungsrelais K 48 und
speist das Leistungsschütz K 50. Wenn das Resonanzschwellenrelais K 44 die Resonanzschwelle eines gefährlichen Anfangswertes von dem Differentialquotienten
des Stromquadrates über der Zeit erfaßt hat und der
Ruhekontakt K 44A geöffnet ist, ist die Gefahr vorbei. Die Leistungsfaktorkorrektur ist gestoppt. Nach
Speisung des Leistungsschützes K 50 verändert die
Induktivität 51, die normalerweise, wie
in Fig. 10 dargestellt, über den Ruhekontakt K 50A
des Leistungsschützes K 50 kurzgeschlossen ist, die
Reaktanz der Netzleitung und verhindert somit die
Resonanz. Die Spulen des Resonanzschwellenrelais K 44,
des Resonanzkontrollenrelais K 46 und Zeitverzögerungsrelais K 48 werden spannungslos. Der Ruhekontakt K 48A
des Zeitverzögerungsrelais K 48 bleibt aber geschlossen,
das Leistungsschütz K 50 wird weiterhin gespeist und
dessen Ruhekontakt K 50A bleibt geöffnet. Der Ruhekontakt K 44A bleibt geschlossen, die Ruhekontakte K 44B und K 46A bleiben geöffent. Das bewirkt, daß die "rechtsdrehende" Bewegung des DC-Elektromotors 11 wieder aufgenommen und der Vorgang der Leistungsfaktorverbesserung fortgesetzt wird, bis das der Leistungsfaktor eins geworden ist.

Fig. 12 zeigt eine mögliche Ausführungsform der Meßeinrichtungen 42. Ein Analog-Digitalwandler 52, der von dem Wechselstromumformer 41 versorgt wird, speist einen handelsüblichen Quadrierschaltkreis 53, dessen gleichgerichtetes Ausgangsignal proportional zum Stromquadrat ($I^2$) ist. Die Abtast-rate von $I^2$ ist, verglichen mit der Frequenz des Netzes, relativ langsam, zum Beispiel zwei Perioden pro Sekunde. Ein Zähler 54 tastet $I^2$ mit einer Rate ab, die ausreicht, um jegliche Veränderungen im Durchschnittswert zu ermitteln, zum Beispiel mit einer Rate von zehn Abtastungen pro Sekunde. Ein UND-Glied 55, welches das $I^2$-Signal aufnimmt, und ein UND-Glied 56, welches das über einen Analog-Digital-Wandler 57 digitalisierte Signal des Blindleistungssensor 43 aufnimmt, werden beide vom Zähler 54 abgetastet. Der Ausgang des UND-Gliedes 55, der das vom Zähler 54 abgetastete $I^2$-Signal bildet, speist zum einen direkt einen Eingang eines Subtrahierers 58 und zum anderen einen zweiten Eingang des Subtrahierers 58 über einen Verzögerungsschaltkreis, der sich aus einem Digital-Analogwandler 59, einer Verzögerung 60 und einem Analog-Digital-Wandler 61 zusammensetzt. Die gesamte Verzögerung dieses Verzögerungsschaltkreises ist gleich 1/f, wobei f die Abtastfrequenz des Zählers 54 ist. Demzufolge hat der Subtrahierer 58 an seinem Ausgang ein Signal, welches proportional zu dem Differentialquotienten aus dem Stromquadrat zu der Zeit ist.

Gleichermaßen speist ein von den Blindleistungssensor 43 versorgter Analog-Digital-Wandler 57
ein UND-Glied 56 sowie einen Eingang eines Subtrahierers 62 direkt, während ein zweiter Eingang des Subtrahierers 62 über einen Verzögerungsschaltkreis gespeist wird, der sich aus einem
Digital-Analog-Wandler 63, einer Verzögerung 64
und einem Analog-Digital-Wandler 65 zusammensetzt.
Am Ausgang des Subtrahierers 62 erscheint somit
ein Signal, welches proportional dem Differentialquotienten aus der Blindleistung über die Zeit ist.
Der Ausgang des Subtrahierers 62 speist einen Eingang eines handelsüblichen logischen Dividierers 66,
während der zweite Eingang des logischen Dividierers 66
den Ausgang des Subtrahierers 58 aufnimmt, und zwar
in der Weise, das am Ausgang des logischen Dividierers 66
ein digitalisiertes Signal erscheint, welches proportional zu dem Differentialquotienten aus dem Stromquadrat zu der Blindleistung ist. Dieses digitalisierte
Signal wird von einem Digital-Analog-Wandler 67 in
ein analoges Signal  umgeformt. Der Ausgang des Digital-
Analog-Wandlers 67 speist die Gleichrichter 68 und 69
über einen (nicht dargestellten) Isolierkreis. Der
Ausgang des Gleichrichters 68 gibt ein negatives
Signal, der Ausgang des Gleichrichters 69 ein positives
Signal. Diese Ausgänge wiederum speisen die Spule
der Relais K 30 und K 31.

In Fig. 13 ist eine zweite Ausführungsform zur Ermittlung des Differentialquotienten aus dem Stromquadrat zu der Blindleistung dargestellt. Das von
dem Wechselstromumformer 41, Fig. 10, erzeugte Signal
wird von dem Analog-Digital-Wandler 52 digitalisiert
und dem Eingang eines Tiefpaßfilters 70 zur Verfügung
gestellt. Der Ausgang des Tiefpaßfilters 70 wird
einer Abtaster-und Halteschaltung 71 zugeführt. Das von der Abtaster- und Halteschaltung 71 erzeugte
Signal wird über einen Stromkomparator 72 und
einem Quadrierer 73 einem UND-Glied 74 zugeführt.
Ein zweiter Ausgang des Tiefpaßfilters 70 und
ein zweiter Ausgang des Stromkomparators 72 sind
mit einem Schwellenglied 75 für die untere Schwelle
und einem Schwellenglied 76 für die obere Schwelle
verbunden. Das von dem Blindleistungssensor 43 erzeugte und von dem Analog-Digital-Wandler 57 digitalisierte Signal wird einem Tiefpaßfilter 77 zur
Verfügung gestellt. Der Ausgang des Tiefpaßfilters 77
ist mit einem UND-Glied 78 gekoppelt. Der Zähler 54
geht in einen zweiten Eingang des UND-Gliedes 78 und
des UND-Gliedes 74. Die Ausgänge der UND-Glieder 74
und 78 sind mit einer programmierbaren Ablaufsteuerung 79 verbunden, die Anschlüsse zu den Enschaltern 32 und 33 und dem Resonanzschwellenrelais K 44
aufweist und aus Subtrahierer 80 und 81 und Teiler 82
besteht. Das Ausgangssignal der programmierbaren
Ablaufsteuerung 79, welches proportional dem Differentialquotienten aus dem Stromquadrat zu der Blindleistung ist, wird von einem Digital-Analog-Wandler 83
umgeformt und an einen Optokoppler 84 angelegt. Ist
das Signal negativ, so wird es über den Gleichrichter 68
mit dem Eingang des Relais K 30 verbunden, ist es
positiv, über den Gleichrichter 69 mit dem Relais K 31.

Bezugszeichenliste :

1 = Last

2 = Blindleistungssensor

3 = Serientransformator

4 = Primärwicklung des Serientransformators

5 = Sekundärwicklung des Serientransformators

6 = Stelltransformator

7 = Stromabnehmer

8 = Stromabnehmer

9 = Sicherung

10 = Kondensator

11 = DC-Motor

12 = Regelschleifen

13 = Spartransformator

14 = Grund oder Primärwicklung des Spartransformators

15 = Zusatzwicklung des Spartransformators

16 = Aufwärtstransformator

17 = Primärwicklung des Aufwärtstransformators

18 = Sekundärwicklung des Aufwärtstransformators

19 = Primärhochspannungswicklung des Stelltransformators

20 = Sekundärniederspannungswicklung des Stelltransformators

21 = Zwei-Wicklungen-Transformator

22 = Sekundärniederspannungswicklung des Zwei-Wicklungen-Transformators

23 = Rückführsignal

24 = Blindleistungsregler

25 = Referenzsignal

26 = Rückführsignalsteuerung

27 = Komparator

28 = Servoverstärker

29 = Fehlersignal

30 = Relais

31 = Relais

32 = Endschalter

33 = Endschalter

34 = Blindleistungssensor

35 = Blindleistungssensor

36 = Stromwandler

37 = Stromwandler

38 = Potentiometer

39 = Abnehmer

40 = Stromwandler

41 = Wechselstromumformer

42 = Meßeinrichtungen

43 = Blindleistungssensor

44 = Resonanzschwellenrelais

45 = Schaltkreis

46 = Resonanzkontrollrelais

47 = Schaltkreis

48 = Zeitverzögerungsrelais

49 = Schaltkreis

50 = Leistungsschütz

51 = Induktivität

52 = Analog-Digital-Wandler

53 = Quadrierschaltkreis

54 = Zähler

55 = UND-Glied

56 = UND-Glied

57 = Analog-Digital-Wandler

58 = Subtrahierer

59 = Digital-Analog-Wandler

60 = Verzögerung

61 = Analog-Digital-Wandler

62 = Subtrahierer

63 = Digital-Analog-Wandler

64 = Verzögerung

65 = Analog-Digital-Wandler

66 = Dividierer

67 = Digital-Analog-Wandler

68 = Gleichrichter

69 = Gleichrichter

70 = Tiefpaßfilter

71 = Abtaster und Halteschaltung

72 = Stromkomparator

73 = Quadrierer

74 = UND-Glied

75 = Schwellenglied

76 = Schwellenglied

77 = Tiefpaßfilter

78 = UND-Glied

79 = programmierbare Ablaufsteuerung

80 = Subtrahierer

81 = Subtrahierer

82 = Teiler

83 = Digital-Analog-Wandler

84 = Opto-Koppler

## BIBRACH & REHBERG

### ANWALTSSOZIETÄT

BIBRACH & REHBERG, POSTFACH 14-53, D-3400 GÖTTINGEN

PATENTANWALT DIPL.-ING. RUDOLF BIBRACH
PATENTANWALT DIPL.-ING. ELMAR REHBERG

TELEFON: (0551) 4 50 34 / 35
TELEX: 96616 bipat d
POSTGIROKONTO: HANNOVER
(BLZ 250100 30) NR. 1157 63-301
BANKKONTEN: DEUTSCHE BANK AG GÖTTINGEN
(BLZ 260 700 72) NR. 01 / 85 900
COMMERZBANK GÖTTINGEN
(BLZ 260 400 30) NR. 6 425 722

| IHR ZEICHEN | IHR SCHREIBEN VOM | UNSER ZEICHEN | D-3400 GÖTTINGEN, |
| YOUR REF. | YOUR LETTER | OUR REF. | PÜTTERWEG 6 |
| | | 12.152/mi9 | 03.11.1986 |

0227924

Ruhstrat GmbH, Heinestr. 12 - 22, 3406 Bovenden 1

Blindleistungsregeleinrichtung zur Blindleistungskontrolle
und Leistungsfaktorkorrektur

Patentansprüche:

1. Blindleistungsregeleinrichtung zur Blindleistungskontrolle und Leistungsfaktorkorrektur, bestehend
aus einer Blindleistungsausgleichsvorrichtung, die
in Abhängigkeit einer induktiven oder kapazitiven
Last im Netz mit vorgegebener Netzspannung über
sich ändernden kapazitiven oder induktiven Einrichtungen eine kompensierende Blindleistung
erzeugt, dadurch gekennzeichnet, daß die Blindleistungsausgleichsvorrichtung im Nebenschluß
zum Netz geschaltet ist, mindestens eine feste

- 2 -

0227924

kapazitive oder induktive Einrichtung und ein
separates Versorgungsnetz beinhaltet, welches
die Spannung für die kapazitive oder induktive
Einrichtung liefert, wobei das separate Versorgungsnetz, in Abhängigkeit der im Netz vorhandenen Last, die an der kapazitiven oder induktiven Einrichtung angelegte Spannung automatisch
fortlaufend stufenlos derart regelt, daß eine
kompensierende Blindleistung erzeugt wird, die
sich quadratisch mit der momentan angelegten
Spannung ändert.

2. Blindleistungsregeleinrichtung nach Anspruch 1,
   dadurch gekennzeichnet, daß das separate Versorgungsnetz aus einem Serientransformator(3)
   mit isolierter Primär- (4) und Sekundärwicklung (5)
   und einem Stelltransformator (6) besteht, wobei
   die Sekundärwicklung (5) des Serientransformators (3)
   in Reihe mit der kapazitiven oder induktiven Einrichtung geschaltet und der Stelltransformator (6)
   an das Netz angeschlossen ist.

3. Blindleistungsregeleinrichtung nach Anspruch 1,
   dadurch gekennzeichnet, daß das separate Versorgungsnetz Regelschleifen (12) aufweist, die
   einen Blindleistungssensor (2) und einen Blindleistungsregler (24) beinhalten, wobei der Blindleistungssensor (2) ein Rückführsignal (23) erzeugt,
   welches proportional der durch die Last im Netz hervorgerufenen Blindleistung ist und der Blindleistungsregler (24) aus einer Rückführsignalsteuerung (26),
   die ein der kompensierenden Blindleistung proportionales Referenzsignal (25) erzeugt, einer Komparatoreinrichtung (27), die das Rückführ- (23) und Referenzsignal (25) vergleicht und in Abhängigkeit davon

ein Fehlersignal (29) bildét und einem Servorverstärker (28), der in Abhängigkeit vom Fehlersignal (29) den Stelltransformator (6) regelt,
besteht.

4.   Blindleistungsregeleinrichtung nach Anspruch 1 und
     2, dadurch gekennzeichnet, daß der Stelltransformator (6) für jede Phase des Netzes eine Wicklungssäule aufweist, wobei jede Wicklungssäule eine
     gleiche Anzahl von Stromabnehmern (7, 8) hat, die
     um 180° versetzt auf dem Umfang der Wicklungsoberfläche angeordnet sind und von denen jeweils die
     Hälfte in entgegengesetzter Richtung läuft und
     für jede Phase des Netzes eine kapazitive oder
     induktive Einrichtung vorgesehen ist.

5.   Blindleistungsregeleinrichtung nach Anspruch 1,
     dadurch gekennzeichnet, daß die feste kapazitive
     Einrichtung ein einzelner Kondensator (10) ist,
     der eine höhere Nennspannung als das Netz haben
     kann.

6.   Blindleistungsregeleinrichtung nach Anspruch 1,
     2 und 3, dadurch gekennzeichnet, daß dem Servoverstärker (28) ein DC-Motor (11) nachgeschaltet
     ist.

7.   Blindleistungsregeleinrichtung nach Anspruch 1
     und 2, dadurch gekennzeichnet, daß das separate
     Versorgungsnetz weiterhin einen Spartransformator (13)
     in Zu- und Gegenschaltung aufweist, der vom Netz
     gespeist wird und dessen Ausgang vor die Sekundärwicklung (5) des Serientransformators (3) geschaltet
     ist.

0227924

8.  Blindleistungsregeleinrichtung nach Anspruch 1 und
    2, dadurch gekennzeichnet, daß das Netz ein Niederspannungsnetz mit einer kleineren Spannung als 1,2 kV
    ist und mindestens eine kapazitive Einrichtung eine
    feste kapazitive Einrichtung für eine Hochspannung
    von insbesondere 15 kV hat, daß separate Versorgungsnetz weiterhin einen Aufwärtstransformator (16) mit
    zwei Wicklungen (17, 18) beinhaltet, der von dem
    Niederspannungsnetz gespeist wird und dessen Ausgang
    vor die Sekundärwicklung (5) des Serientransformators (3) geschaltet ist.

9.  Blindleistungsregeleinrichtung nach Anspruch 1 und
    2, dadurch gekennzeichnet, daß das Netz eine höhere
    Spannung als 1,2 kV hat, also ab 1,2 kV bis 380 kV,
    die Primärwicklung (4) des Serientransformators (3)
    eine Niederspannungswicklung ist und der Stelltransformator (6) zwei voneinander isolierte Wicklungen
    aufweist, von denen eine eine mit dem Netz paralles
    geschaltete Primärhochspannungswicklung (19) ist,
    und die andere Wicklung des Stelltransformators (6)
    eine Sekundärniederspannungswicklung (20) mit
    variablem Ausgang ist, die die Primärwicklung (4) des
    Serientransformators (3) speist.

10. Blindleistungsregeleinrichtung nach Anspruch 1 und
    2, dadurch gekennzeichnet, daß der Stelltransformator (6) ein Niederspannungstransformator ist und
    das Netz eine höhere Spannung als 1,2 kV hat, die
    Primärwicklung (4) des Serientransformators (3) eine
    Niederspannungswicklung ist und daß das separate
    Versorgungsnetz einen isolierten Zwei-Wicklung-Transformator (21) mit festem Übersetzungsverhältnis beinhaltet, dessen Primärhochspannungswicklung (19)
    parallel zum Netz geschaltet ist und dessen Sekundärniederspannungswicklung (22) den Stelltransformator (6) speist.

11.  Blindleistungsregeleinrichtung nach Anspruch 1 und
     2, dadurch gekennzeichnet, daß ein vom Netz gespeistet Einschaltregelsystem vorgesehen ist, das
     aus Spannungsmeßeinrichtungen mit nachgeschalteten
     Regeleinrichtungen, aus Freigabeeinrichtungen und
     Nachfolgeeinrichtungen besteht, wobei die Spannungsmeßeinrichtungen mit den Regeleinrichtungen den
     Stelltransformator (6) vom Netz trennen, wenn die
     Leistung des Netzes abgeschaltet wird, wobei dann
     der Stelltransformator (6) zu einer dämpfenden Last
     für die Primärwicklung (4) des Serientransformators (3)
     wird und die Sekundärwicklung (5) des Serientransformators (3) zu einer Primärwicklung und die Primärwicklung (4) des Serientransformators (3) zu einer
     Sekundärwicklung wird, wobei gleichzeitig zu dem
     Trennen des Stelltransformators (6) von dem Netz
     die Regelschleifen (12) des separaten Versorgungsnetzes außer Betrieb gesetzt werden, wodurch keine
     weitere kompensierende Blindleistung erzeugt wird;
     die Freigabeeinrichtungen in Verbindung mit den
     Nachfolgeeinrichtungen beim Einschalten der Leistung
     des Netzes den Stelltransformator (6) auf die
     kleinste mögliche Spannung einstellen, den Stelltransformator (6) wieder an das Netz anschließen,
     wobei nachfolgend die Primär- (4) und Sekundärwicklung (5) des Serientransformators (3) wieder entsprechend ihrer ursprünglichen Bestimmung geschaltet
     werden, die Nachfolgeeinrichtungen die Regelschleifen (12)
     des separaten Versorgungsnetzes wieder freigeben und
     wieder eine kontinuierlich geregelte kompensierende
     Blindleistung erzeugt wird.

12.  Blindleistungsregeleinrichtung nach Anspruch 1, dadurch
     gekennzeichnet, daß Meßeinrichtungen und Kontrolleinrichtungen vorgesehen sind, die Meßeinrichtungen mit
     dem Netz verbunden sind und ein Signal erzeugen, welches proportional dem Differentialquotienten aus dem
Stromquadrat zu der durch die Last hervorgerufenen
Blindleistung ist, die Kontrolleinrichtungen mit
den Meßeinrichtungen und den Regelschleifen (12)
des separaten Versorgungsnetzes verbunden sind
und die kompensierende Blindleistung derart regeln,
daß der Differentialquotient aus dem Stromquadrat
zu der durch die Last hervorgerufenen Blindleistung
praktisch immer Null ist, wobei die Meßeinrichtungen
Abtasteinrichtungen zur Ermittlung des im Netz
fließenden Stromquadrates und der kompensierenden
Blindleistung, mit dem Netz verbundene Differentialmeßeinrichtungen zur Ermittlung des im Netz fließenden
Stromquadrates über die Zeit, mit der Blindleistungsausgleichseinrichtung verbundene Differentialmeßeinrichtungen zur Ermittlung der kompensierenden Blindleistung über die Zeit und an den Differentialmeßeinrichtungen angeschlossene logische Schaltkreise
einschließlich Teilereinrichtungen, die ein zu dem
Differentialquotienten aus dem Stromquadrat zu der
durch die Last hervorgerufenen Blindleistung proportionales Signal liefern, beinhalten und die
Differentialmeßeinrichtungen vorzugsweise aus Meßumformer, Analog-Digital- und Digital-Analog-Wandler,
Verzögerungseinrichtungen und Subtraktoren bestehen.

13. Blindleistungsregeleinrichtung nach Anspruch 1, dadurch
gekennzeichnet, daß Einrichtungen zur Ermittlung einer
entstehenden Anfangsresonanz, zur Resonanzunterdrückung
und Abschalteinrichtungen zum Stoppen der Zunahme der kompensierenden Blindleistung vorgesehen sind, wobei die
Einrichtungen zur Ermittlung einer entstehenden Anfangsresonanz an das Netz angeschlossen sind und ein Resonanzschwellenrelais (K 44), ein Resonanzkontrollrelais (K 46)
und ein Zeitverzögerungsrelais (K 48) beinhalten, daß das Resonanzschwellenrelais (K 44) zwei Ruhekontakte (K 44A, K 44B) aufweist, wobei der
erste Ruhekontakt (K 44A) bei Aktivierung der
Einrichtungen zur Ermittlung einer entstehenden
Anfangsresonanz den Stromkreis des DC-Motors (11)
für eine Zunahme der kompensierenden Blindleistung unterbricht, der zweite Ruhekontakt
(K 44B) in Reihe geschaltet ist mit dem Resonanzkontrollrelais ( 46), ein Ruhekontakt (K 46A) des
Resonanzkontrollrelais (K 46 in Reihe geschaltet
ist mit dem Zeitverzögerungsrelais (K 48) bei vorgewählter Verzögerungszeit; die Einrichtungen zur
Rosonanzunterdrückung eine in das Netz eingefügte
Induktivität (51) durch einen Leistungsschütz (K 50)
beinhalten, der Leistungsschütz (K 50) einen Arbeitskontakt K 50A) aufweist, der in Reihe mit dem
Arbeitskontakt (K 48A) des Zeitverzögerungsrelais
(K 48) geschaltet ist und der normalerweise die
Induktivität (51) kurzschließt, der Arbeitskontakt
(K 50A) bei Energiezufuhr nach Ablauf der vorgewählten Verzögerungszeit des Zeitverzögerungsrelais
(K 48) diesen Kurzschluß beseitigt.

0227924

FIG. 1

FIG. 2

FIG 2A

FIG 2B

2/2

0227924

FIG. 3

FIG. 4

4|12

0227924

FIG. 5

Spannung unter 1,2 kV

L    N

Spannung größer als 1,2kV

16    3    6

17  18    5   4    7

8

10

1

0227924

5/2

FIG. 6

Spannung größer als 1,2kV

Spannung unter 1,2kV

N

L

3
4
5
10
19
6
7
8
20
1

FIG. 7

Spannung wesentlich größer als 1,2kV

Spannung
unter 1,2kV

0227924

Fig.8

FIG. 9

FIG. 10

FIG. 11

FIG 12

( Alternative 1 )

12|12

( Alternative 2 )